# EUROPEAN PATENT APPLICATION

(11) **EP 4 778 412 A1**
(43) Date of publication of application: **22.07.2026**
(21) Application number: 24865634.0
(22) Date of filing: 27.06.2024
(51) Int. Cl.: A24F 40/50, A24F 40/57, A24F 40/465, H05B 6/36, H05B 6/06, H02M 7/02

(54) **AEROSOL GENERATING APPARATUS**

(30) Priority: 14.09.2023 KR 20230122441
(71) Applicant: KT&G Corporation, Daedeok-gu Daejeon 34337 (KR)
(72) Inventor: PARK, Sangkyu, Seoul 05281 (KR); LEE, Jaemin, Siheung-si Gyeonggi-do 15010 (KR); KIM, Sangjoon, Yongin-si Gyeonggi-do 16978 (KR); JUNG, Sehwan, Anyang-si Gyeonggi-do 13916 (KR)
(74) Representative: Schornack, Oliver
(86) International application number: PCT/KR2024/009029
(87) International publication number: WO 2025/058191

(57) **Abstract**

An aerosol-generating device is disclosed. The aerosol-generating device includes a body having an insertion space open upward and an induction coil surrounding the insertion coil, a heater holder detachably coupled to the body and provided with a heater accommodated in the insertion space, a temperature sensor disposed adjacent to the heater, a power supply configured to supply power to the induction coil, and a controller configured to control the power applied to the induction coil. The controller is configured to determine a reference impedance parameter based on a signal received from the temperature sensor, determine an impedance parameter of the heater based on a current value flowing through the induction coil, and control the power applied to the induction coil based on the reference impedance parameter and the determined impedance parameter of the heater.

## Description

### Technical Field]

The present disclosure relates to an aerosol-generating device.

### [Background Art]

An aerosol-generating device is a device that extracts certain components from a medium or a substance by generating an aerosol. The medium may contain a multicomponent substance. The substance contained in the medium may be a multicomponent flavoring substance. For example, the substance contained in the medium may include a nicotine component, an herbal component, and/or a coffee component. Recently, various studies on aerosol-generating devices have been conducted.

In an aerosol-generating device in which a heater operating as a susceptor has a detachable structure, even if heaters are manufactured to the same specifications and/or using the same material, the characteristics of the respective heaters, such as impedance, may be different. In this case, the heating rates or heating temperatures of the respective heaters may be different.

In order to measure the temperature of the heater, a temperature sensor must be attached to the heater. However, if a temperature sensor is attached to a heater in a separation type heater structure, the structure becomes complicated and the unit price increases.

Furthermore, if a temperature sensor is provided in a body coupled to the heater, in a situation in which the temperature of the heater changes, the temperature measured by the temperature sensor may not accurately match the actual temperature of the heater.

### [Disclosure]

### [Technical Problem]

It is an object of the present disclosure to solve the above and other problems.

It is another object of the present disclosure to provide an aerosol-generating device that controls power applied to an induction coil based on a reference impedance parameter and an impedance parameter of a heater.

It is yet another object of the present disclosure to provide an aerosol-generating device that determines temperature-dependent impedance parameter characteristics of a heater based on a reference impedance parameter and an impedance parameter of the heater.

It is still another object of the present disclosure to provide an aerosol-generating device that determines a temperature of a heater based on temperature-dependent impedance parameter characteristics of the heater, and controls power applied to an induction coil based on the temperature of the heater.

It is still yet another object of the present disclosure to provide an aerosol-generating device that determines a reference impedance parameter, if a measured temperature of a temperature sensor is a predetermined temperature or lower or is maintained within a predetermined temperature range for a predetermined time or longer.

### [Technical Solution]

In accordance with an aspect of the present disclosure, the above and other objects can be accomplished by the provision of an aerosol-generating device including a body having an insertion space open upward and an induction coil surrounding the insertion coil, a heater holder detachably coupled to the body and provided with a heater accommodated in the insertion space, a temperature sensor disposed adjacent to the heater, a power supply configured to supply power to the induction coil, and a controller configured to control the power applied to the induction coil, wherein the controller is configured to determine a reference impedance parameter based on a signal received from the temperature sensor, determine an impedance parameter of the heater based on a current value flowing through the induction coil, and control the power applied to the induction coil based on the reference impedance parameter and the determined impedance parameter of the heater.

### [Advantageous effects]

According to at least one of embodiments of the present disclosure, an impedance parameter of a heater is compared with a reference impedance parameter and temperature-dependent impedance parameter characteristics of the heater are determined, thereby being capable of accurately determining the temperature-dependent impedance characteristics of the heater.

According to at least one of embodiments of the present disclosure, if a measured temperature of a temperature sensor is a predetermined temperature or lower or is maintained within a predetermined temperature range for a predetermined time or longer, a reference impedance parameter is determined, thereby being capable of accurately determining temperature-dependent impedance characteristics of a heater.

According to at least one of embodiments of the present disclosure, temperature-dependent impedance characteristics of a heater are determined and power applied to an induction coil is controlled based on the temperature-dependent impedance characteristics of the heater, thereby being capable of accurately controlling heating of the heater, even if there is a deviation between separation type heaters.

According to at least one of embodiments of the present disclosure, a temperature sensor is disposed adjacent to a space into which a heater is inserted, thereby being capable of accurately measuring a reference temperature for determining temperature-dependent impedance characteristics of the heater.

According to at least one of embodiments of the present disclosure, a constant voltage is applied to a heater and a current value flowing through an induction coil is measured, thereby being capable of accurately measuring an impedance parameter of the heater.

Additional applications of the present disclosure will become apparent from the following detailed description. However, because various changes and modifications will be clearly understood by those skilled in the art within the spirit and scope of the present disclosure, it should be understood that the detailed description and specific embodiments, such as preferred embodiments of the present disclosure, are merely given by way of example.

### [Description of Drawings]

FIG. 1 is a view showing an aerosol-generating device according to one embodiment of the present disclosure.
FIG. 2 is a front perspective view of the aerosol-generating device according to one embodiment of the present disclosure.
FIG. 3 is a cross-sectional view of the aerosol-generating device according to one embodiment of the present disclosure in a state in which an upper case, a body, and a heater holder are combined.
FIG. 4 is an exploded cross-sectional view of the aerosol-generating device according to one embodiment of the present disclosure in a state in which the upper case, the body, and the heater holder are separated.
FIG. 5 is a cross-sectional view of the heater holder of the aerosol-generating device according to one embodiment of the present disclosure.
FIG. 6 is an exploded cross-sectional view of an aerosol-generating device according to another embodiment of the present disclosure in a state in which an upper case, a body, and a heater holder are separated. /
FIG. 7 is a diagram of a circuit for driving an induction coil of the aerosol-generating device according to one embodiment of the present disclosure.
FIG. 8 is a flowchart illustrating heater heating control using the induction coil of the aerosol-generating device according to one embodiment of the present disclosure.
FIG. 9 shows graphs illustrating a temperature change depending on power application to a separation type heater of the aerosol-generating device according to one embodiment of the present disclosure.
FIG. 10 is a graph illustrating impedances of separation type heaters of the aerosol-generating device according to one embodiment of the present disclosure.
FIG. 11 is a graph illustrating temperature changes measured by temperature sensors depending on temperature changes of the heaters of the aerosol-generating device according to one embodiment of the present disclosure.
FIG. 12 is a table illustrating a heater temperature-impedance relationship depending on a difference between the impedance of the separation type heater of the aerosol-generating device according to one embodiment of the present disclosure and a reference impedance.
FIG. 13 is a block diagram of the aerosol-generating device according to one embodiment of the present disclosure.

### [Mode for Invention]

Hereinafter, the embodiments of the present disclosure will be described in detail with reference to the accompanying drawings, the same or similar elements are denoted by the same reference numerals even though they are depicted in different drawings, and redundant descriptions thereof will be omitted.

In the following description, with respect to constituent elements used in the following description, the suffixes "module" and "unit" are used only in consideration of facilitation of description, and do not have mutually distinguished meanings or functions.

In addition, in the following description of the embodiments of the present disclosure, a detailed description of known functions and configurations incorporated herein will be omitted when the same may make the subject matter of the embodiments of the present disclosure rather unclear. In addition, the accompanying drawings are provided only for a better understanding of the embodiments of the present disclosure and are not intended to limit the technical ideas of the present disclosure. Therefore, it should be understood that the accompanying drawings include all modifications, equivalents, and substitutions within the scope and sprit of the present disclosure.

It will be understood that although the terms "first", "second", etc., may be used herein to describe various components, these components should not be limited by these terms. These terms are only used to distinguish one component from another component.

It will be understood that when a component is referred to as being "connected to" or "coupled to" another component, it may be directly connected to or coupled to another component, or intervening components may be present. On the other hand, when a component is referred to as being "directly connected to" or "directly coupled to" another component, it is to be understood that there are no intervening components present.

As used herein, the singular forms are intended to include the plural forms as well, unless the context clearly indicates otherwise.

Throughout the following description, the direction of an aerosol-generating device and a cartridge may be defined based on an orthogonal coordinate system. In the orthogonal coordinate system, an x-axis direction may be defined as the leftward or rightward direction of the aerosol-generating device and the cartridge. Here, with respect to the origin, a +x direction may indicate the rightward direction, and a -x direction may indicate the leftward direction. A y-axis direction may be defined as the forward or rearward direction of the aerosol-generating device and the cartridge. Here, with respect to the origin, a +y direction may indicate the rearward direction, and a -y direction may indicate the forward direction. A z-axis direction may be defined as the upward or downward direction of the aerosol-generating device and the cartridge. With respect to the origin, a +z direction may indicate the upward direction, and a -z direction may indicate the downward direction.

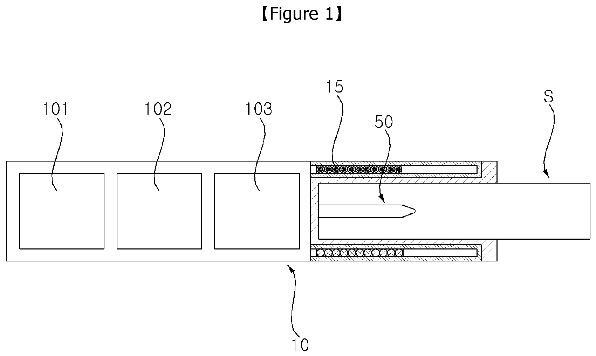

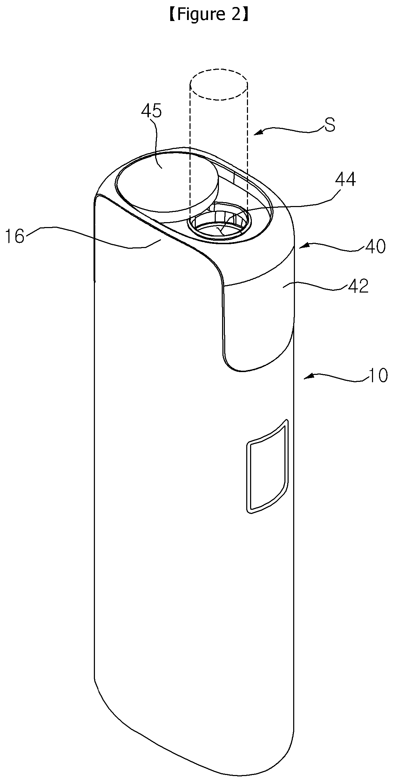

Throughout the following description, "upstream" and "downstream" may be determined based on the direction of airflow provided so that a generated aerosol is inhaled into the user's mouth or lungs when the user inhales air. For example, in FIGs. 1 and 2, the generated aerosol flows from a portion of a stick S inserted into the aerosol-generating device to a non-inserted portion, and thus, the inserted portion of the stick S is located upstream of the non-inserted portion. "Upstream" and "downstream" may be determined relatively between components.

FIG. 1 is a view showing an aerosol-generating device according to one embodiment of the present disclosure.

Referring to FIG. 1, an aerosol-generating device 1 according to embodiments of the present disclosure may include at least one of a power supply 101, a controller 102, a sensor 103, or a heater 50. At least one of the power supply 101, the controller 102, the sensor 103, or the heater 50 may be disposed in a body 10 of the aerosol-generating device. The body 10 may define a space having an open top to allow a stick S, which is an aerosol-generating article, to be inserted thereinto. The space having an open top may be referred to as an insertion space. The insertion space may be formed so as to be depressed to a predetermined depth toward the interior of the body 10 so that the stick S is inserted at least partway thereinto. The depth of the insertion space may correspond to the length of the portion of the stick S that contains an aerosol-generating substance and/or medium. The lower end of the stick S may be inserted into the body 10, and the upper end of the stick S may protrude to the outside of the body 10. A user may inhale air in a state of holding the upper end of the stick S, which is exposed to the outside, in the mouth.

The stick S may be similar to a typical combustible cigarette. For example, the stick S may be divided into a first part including an aerosol-generating material and/or medium and a second part including a filter, etc. Alternatively, the second part of the stick S may also include an aerosol-generating material and/or medium. For example, an aerosol-generating material and/or medium made in the form of granules or capsules may be inserted into the second part.

The entirety of the first part may be inserted into the aerosol-generating device 1, and the second part may be exposed to the outside. Alternatively, only a portion of the first part may be inserted into the aerosol-generating device 1, or the first part and a portion of the second part may be inserted thereinto. A user may inhale an aerosol while holding the second part in his/her mouth. At this time, the aerosol may be generated by external air passing through the first part, and the generated aerosol may be delivered to the user's mouth via the second part.

The heater 50 may heat the stick S. The heater 50 may be elongated upward in the space into which the stick S is inserted. For example, the heater 50 may include a tube-type heating element, a plate-type heating element, a needle-type heating element, or a rod-type heating element. The heater 50 may be inserted into a lower portion of the stick S. The heater 50 may include induction heater.

The aerosol-generating device may include an induction coil 15 surrounding the heater 50. The induction coil 15 may cause the heater 50 to generate heat. The heater 50 as a susceptor may generate heat using a magnetic field generated by alternating current flowing through the induction coil 15. The magnetic field may pass through the heater 50 to generate an eddy current in the heater 18. The current may cause the heater 50 to generate heat.

The power supply 101 may supply power so that components of the aerosol-generating device operate. The power supply 101 may be referred to as a battery. The power supply 101 may supply power to at least one of the controller 102, the sensor 103, or the heater 50. The power supply 101 may supply power to the induction coil 15.

The controller 102 may control overall operation of the aerosol-generating device. The controller may be mounted on a printed circuit board (PCB). The controller 102 may control operation of at least one of the power supply 101, the sensor 103, or the heater 50. The controller 102 may control operation of the induction coil 15. The controller 102 may control operation of a display, a motor, etc. mounted in the aerosol-generating device. The controller 102 may check the state of each of the components of the aerosol-generating device and may determine whether the aerosol-generating device is in an operable state.

The controller 102 may analyze a result of detection by the sensor 103 and may control subsequent processes. For example, the controller 102 may control, based on a result of detection by the sensor 103, power supplied to the induction coil 15 so that operation of the heater 50 commences or ends. For example, the controller 102 may control, based on a result of detection by the sensor 103, the amount of power supplied to the induction coil 15 and a power supply time so that the heater 50 is heated to a predetermined temperature or is maintained at an appropriate temperature.

The sensor 103 may include at least one of a temperature sensor, a puff sensor, an insertion detection sensor, an acceleration sensor, or a current sensor. For example, the sensor 103 may detect at least one of the temperature of the heater 50, the temperature of the power supply 101, or the internal/external temperature of the body 10. For example, the sensor 103 may detect a user puff. For example, the sensor 103 may detect whether the stick S is inserted into the insertion space. For example, the sensor 103 may detect movement of the aerosol-generating device. For example, the sensor 103 may measure the current applied to the induction coil 15.

FIG. 2 is a front perspective view of the aerosol-generating device according to one embodiment of the present disclosure.

Referring to FIG. 2, an upper case 40 may be detachably coupled to the body 10. The upper case 40 may be coupled to the upper part of the body 10. The upper case 40 may cover the periphery of the upper part of the body 10. The upper case 40 may have an insertion hole 44. The stick S may be inserted into the insertion hole 44. The upper case 40 may include a cap 45 that opens and closes the insertion hole 44. The cap 45 may slide laterally to open and close the insertion hole 44.

The upper case 40 may include upper case wings 42. The upper case wings 42 may extend downward from both sides of an upper case body 41. The upper case wings 42 may be referred to as upper case grips 42.

The body 10 may include body wings 16. The body wings 16 may extend upward from the edge of the upper part of the body 10. The body wings 16 may be formed as a pair so as to face each other with respect to the upper part of the body 10. The body wings 16 may be formed at positions that are misaligned with the upper case wings 42.

When the upper case 40 is coupled to the body 10, the upper case 40 may form the appearance of the upper part of the aerosol-generating device. When the upper case 40 is coupled to the body 10, the body wings 16 may cover the side parts of the upper case 40 exposed between the upper case wings 42. When the upper case 40 is coupled to the body 10, the upper case wings 42 may cover an outer lateral wall of the body 10.

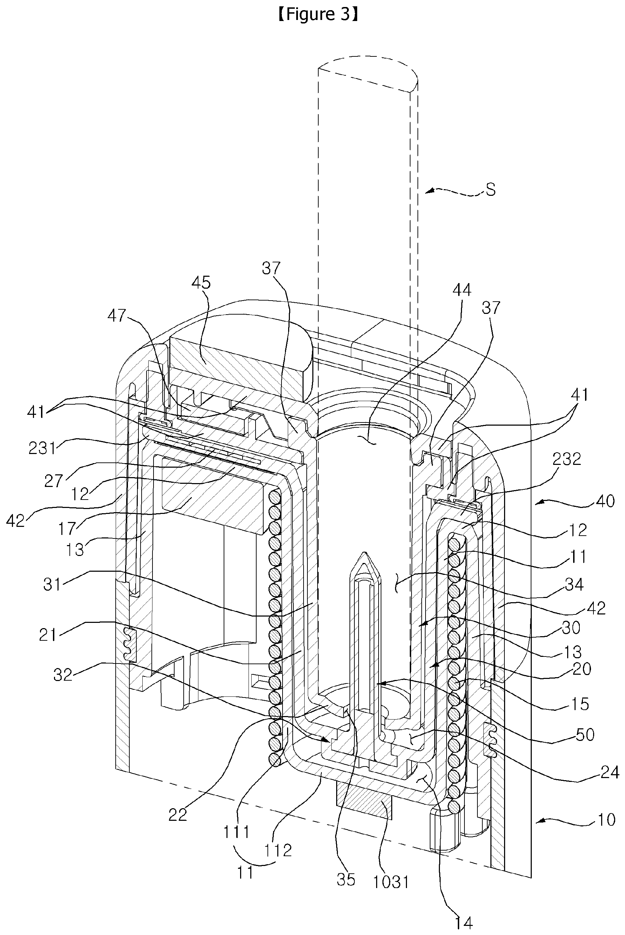

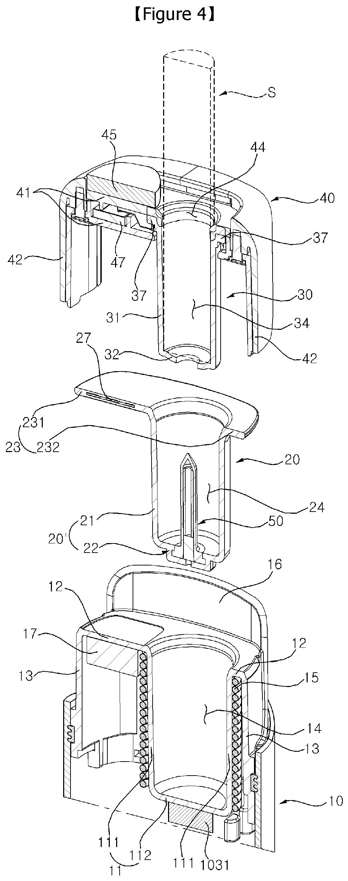

FIG. 3 is a cross-sectional view of the aerosol-generating device according to one embodiment of the present disclosure in a state in which the upper case, the body, and a heater holder are combined, and FIG. 4 is an exploded cross-sectional view of the aerosol-generating device according to one embodiment of the present disclosure in a state in which the upper case, the body, and the heater holder are separated.

Referring to FIGs. 3 and 4, the body 10 may have a shape which extends vertically. The body 10 may be provided with a first insertion space 14 formed therein. The first insertion space 14 may be open upward. The first insertion space 14 may have a cylindrical shape that extends vertically. The first insertion space 14 may be defined by a body pipe 11 formed in the body 10. The body pipe 11 may include a lateral wall 111 surrounding the perimeter of the first insertion space 14, and a lower wall 112 covering the bottom of the first insertion space 14. The lower wall 112 may be formed on the bottom of the body pipe 11. The lateral wall 111 of the body pipe 11 may be referred to as an inner lateral wall 111 of the body 10.

A heater holder 20 may be detachably inserted into the first insertion space 14. The heater holder 20 may be provided with a second insertion space 24 formed therein. The second insertion space 24 may be open upward. The second insertion space 24 may have a cylindrical shape. The second insertion space 24 may be defined by a pipe 20' of the heater holder 20. The pipe 20' may include a lateral wall 21 surrounding the periphery of the second insertion space 24, and a lower wall 22 covering the bottom of the second insertion space 24. The lower wall 22 of the pipe 20' may be referred to as a bottom or a mount. The lower wall 22 of the pipe 20' may form the bottom of the heater holder 20. The heater 50 may be coupled or fixed to the heater holder 20. The pipe 20' may be referred as a heater holder pipe 20'.

An extractor 30 may be detachably inserted into the second insertion space 24. The extractor 30 may be provided with a third insertion space 34 formed therein. The third insertion space 34 may be open to one side. The third insertion space 34 may have a cylindrical shape. The third insertion space 34 may be defined by a lateral wall 31 and a lower wall 32 of the extractor 30. The outer circumferential surface of the extractor 30 may have a cylindrical shape.

The lower end of the stick S may be inserted into the third insertion space 34, and the upper end of the stick S may protrude outside the aerosol-generating device. The heater 50 may heat the first insertion space 14, the second insertion space 24, and the third insertion space 34. The heater 50 may heat the stick S inserted into the third insertion space 34.

Accordingly, the heater 50 may be easily replaced. The sizes of the insertion spaces 14, 24, and 34 and the heater 50 disposed in the insertion spaces 14, 24, and 34 are very small and it may be difficult to replace the heater 50, but a user may easily replace the heater 50 by separating the heater holder 20 from the aerosol-generating device and placing a new heater holder 20 in the aerosol-generating device.

In addition, foreign substances generated from the stick S do not remain around the heater 50 and the heater holder 20, and may be extracted through the extractor 30. Accordingly, it may be easy to clean the aerosol-generating device around the heater 50, and convenience of management may be improved. In addition, factors that reduce the performance of the heater 50 may be reduced, the durability of the heater 50 may be improved, and thus, the replacement cycle of the heater may be increased. In addition, factors that change the taste of the stick S may be reduced.

The lower end of the heater 50 may be fixed to the mount 22. The heater 50 may extend toward the opening of the second insertion space 24. The heater 50 may be formed in a cylindrical shape, and the upper end thereof may be tapered upward. As another example, the heater 50 may have a shape that extends in a circumferential direction, and be coupled to the lateral wall 21 of the heater holder 20. However, this is only an example, and the heater 50 is not limited to the shape described above or illustrated, and may be coupled to the heater holder 50 as long as the heater 50 may heat the stick S inserted into the third insertion space 34.

The heater holder 20 may be formed by insert injection molding using the heater 50 as an insert. The heater holder 20 may have high heat resistance and excellent rigidity. For example, the heater holder 20 may be formed of polyetheretherketone (PEEK). However, the material of the heater holder 20 is not limited thereto.

A through hole 35 may be formed by opening the lower wall 32 of the extractor 30. The through hole 35 may be open vertically. When the extractor 30 is inserted into the second insertion space 24, the heater 50 may penetrate the through hole 35 and protrude into the third insertion space 34. When the stick S is inserted into the insertion space 34, the heater 50 may be inserted into the lower part of the stick S.

The induction coil 15 may surround the first insertion space 14. The induction coil 15 may be wound around the lateral wall 111 of the body pipe 11. The induction coil 15 may surround the heater 50. The induction coil 15 heats the heater 50.

The heater holder 20 may be disposed between the body 10 and the extractor 30. The lateral wall 111 of the body pipe 11 may surround the lateral wall 21 of the heater holder 20. The lower wall 112 of the body pipe 11 may face the lower wall 22 of the heater holder 20. The lateral wall 21 of the heater holder 20 may surround the lateral wall 31 of the extractor 30. The lower wall 22 of the heater holder 20 may face the lower wall 32 of the extractor 30.

The lateral wall 31 of the extractor 30 may be spaced inward from the lateral wall 21 of the heater holder 20. The lower wall 32 of the extractor 30 may be spaced upward from the lower wall 22 of the heater holder 20. Air may flow between the extractor 30 and the heater holder 20, pass through the through hole 35, and then be provided to the stick S inserted into the third insertion space 34.

An upper wall 12 of the body 10 may extend outward in the horizontal direction from the upper end of the body pipe 11. The upper wall 12 of the body 10 may cover the upper end of the induction coil 15. An outer lateral wall 13 of the body 10 may extend downward from the outer end of the upper wall 12 of the body 10. The outer lateral wall 13 of the body 10 may face the lateral wall 111 of the body pipe 11. The outer lateral wall 13 of the body 10 may be spaced outward from the body pipe 11. The induction coil 15 may be disposed between the body pipe 11 and the outer lateral wall 13 of the body 10.

The upper case 40 may be detachably coupled to the body 10. The upper case 40 may be coupled to the upper part of the body 10. The upper case 40 may cover the periphery of the first insertion space 14 and the periphery of the upper part of the body 10. The upper case 40 may have the insertion hole 44. The stick S may be inserted into the insertion hole 44. The upper case 40 may include the cap 45 that opens and closes the insertion hole 44. The cap 45 may slide laterally to open and close the insertion hole 44. The heater holder 20 may be disposed between the body 10 and the upper case 40.

The upper case 40 may include the upper case body 41. The insertion hole 44 may be formed by opening the upper case body 41 vertically. The insertion hole 44 may be formed at a position closer to one side than the center of the upper case body 41. The lower surface of the upper case body 41 may have a shape corresponding to the upper wall 12 of the body 10. The lower surface of the upper case body 41 may extend in the horizontal direction parallel to the upper wall 12 of the body 10. The cap 45 may be installed so as to be slidable on the upper surface of the upper case body 41.

The upper case 40 may include the upper case wings 42. The upper case wings 42 may extend downward from both sides of the upper case body 41. Portions of the side part of the upper case body 41 may be exposed between a pair of upper case wings 42. The upper case wings 42 may be referred to as upper case grips 42.

The extractor 30 may be coupled to the upper case 40. The upper end of the extractor 30 may be coupled to the upper case 40, and the lower end of the extractor 30 may protrude downward from the upper case 40. The extractor 30 may be coupled to a position corresponding to the insertion hole 44. The insertion hole 44 may be located above the third insertion space 34. The insertion hole 44 may connect the third insertion space 34 to the outside of the aerosol-generating device.

The upper end of the extractor 30 may be coupled to the upper case body 41. The extractor 30 may extend downward from the upper case body 41. The extractor 30 may be disposed between the pair of upper case wings 42.

The body 10 may include the body wings 16. The body wings 16 may extend upward from the edge of the upper wall 12 of the body 10. The body wings 16 may be formed as a pair so as to face each other with respect to the upper part of the body 10. The body wings 16 may be formed at positions that are misaligned with the upper case wings 42.

When the upper case 40 is coupled to the body 10, the upper case 40 may form the appearance of the upper part of the aerosol-generating device. When the upper case 40 is coupled to the body 10, the body wings 16 may cover the side part of the upper case 40 exposed between the upper case wings 42. When the upper case 40 is coupled to the body 10, the upper case wings 42 may cover the outer lateral wall 13 of the body 10.

Accordingly, a user may more easily separate the extractor 30 from the body 10. The user may hold the outer part of the upper case 40 and separate the upper case 40 from the body 10, thereby being capable of separating the extractor 30 without inconvenience of gripping the extractor 30 inserted into the second insertion space 24. For example, the user may easily separate the upper case 40 and the extractor 30 from the body 10 by holding the pair of upper case wings 42 and pulling the pair of upper case wing 42 from the body 10.

The extractor 30 may have engaging protrusions 37. The engaging protrusions 37 may protrude outward in the horizontal direction from the outer circumferential surface of the upper end of the extractor 30. The engaging protrusions 37 may be provided in plural. The plurality of engaging protrusions 26 may be arranged to be spaced apart from each other in the circumferential direction. The engaging protrusions 37 may be inserted into a groove formed in the upper case body 41 around the insertion hole 44, thereby being capable of fixing the extractor 30 to the upper case 40. The engaging protrusions 37 may be engaged with the upper case body 41 in the circumferential direction.

Accordingly, during the insertion and separation processes of the stick S, rotation of the extractor 30 in the circumferential direction with respect to the upper case 40 may be prevented.

The heater holder 20 may include an extension 23. The extension 23 may be formed at the upper end of the heater holder 20. The extension 23 may extend outward in the horizontal direction from the upper end of the pipe 20'. The extension 23 may have a plate shape. The extension 23 may be formed such that one side thereof is longer than the other side thereof with respect to the pipe 20'. The extension 23 may be referred to as a heater holder extension 23.

The extension 23 may have a shape corresponding to the upper wall 12 of the body 10. The extension 23 may be formed horizontally with the upper wall 12 of the body 10. When the pipe 20' is inserted into the first insertion space 14, the extension 23 may be supported by or mounted on the upper wall 12 of the body 10. The upper wall 12 of the body 10 may support the extension, and the extension 23 may support pipe 20'. The pipe 20' may be hung on the extension 23, and be spaced upward from the bottom 112 of the body pipe 11 to form an air gap. The outer circumferential surface of the pipe 20' may be spaced inward from the lateral wall 111 of the body pipe 11 to form an air gap.

The extension 23 may have a shape corresponding to the lower surface of the upper case body 41. The extension 23 may be formed horizontally with the lower surface of the upper case body 41. When the upper case 40 is coupled to the body 10 and the extractor 30 is inserted into the pipe 20', the extension 23 may come into contact with the lower surface of the upper case body 41.

A first coupling member 27 may be fixed to the heater holder 20. For example, the first coupling member 27 may be fixed to the extension 23. The first coupling member 27 may be fixed to the inside or the outer surface of the extension 23. The heater holder 20 may be formed by insert injection molding using the first coupling member 27 and the heater 50 as inserts.

The extension 23 may include a first extension part 231 and a second extension part 232. The first extension part 231 may extend from the pipe 20' to one end, and the second extension part 232 may extend from the pipe 20' to the other end. The first extension part 231 may extend longer than the second extension part 232. The perimeter of the first extension part may be greater than the perimeter of the second extension part 232. The first extension part 231 may be formed to have a wider area in the horizontal direction than the second extension part 232. With respect to the pipe 20' extending downward from the plate-shaped extension 23, one side may be defined as the first extension part 231, and the other side may be defined as the second extension part 232. The pipe 20' may extend downward from a portion of the extension 23 that is closer to one side than the center of the extension 23.

The first coupling member 27 may be fixed to the first extension part 231 that extends relatively longer to one side from the pipe 20', among the extension 23. The first coupling member 27 may have a plate shape. The first coupling member 27 may be disposed widely in the horizontal direction on the first extension part 23. The position where the first coupling member 27 is disposed is not limited thereto. For example, the first coupling member 27 may be fixed to the pipe 20'.

The first coupling member 27 may be formed of a magnetic material. The first coupling member 27 may be a ferromagnetic body. For example, the first coupling member 27 may be formed of stainless steel. However, the material of the first coupling member 27 is not limited thereto.

A second coupling member 47 may be fixed to the upper case 40. The second coupling member 47 may be fixed to the inside of the upper case body 41. The second coupling member 47 may be adjacent to the lower surface of the upper case body 41. However, the position where the second coupling member 47 is disposed is not limited thereto. For example, the second coupling member 47 may be fixed to the upper case wing 42. As another example, the second coupling member 47 may be fixed to the extractor 30. The second coupling member 47 may be disposed at a position corresponding to the first coupling member 27.

The second coupling member 47 may exert an attractive force on the first coupling member 27. For example, the first coupling member 27 may be a ferromagnetic body, and the second coupling member 47 may be a magnet. However, the materials of the first coupling member 27 and the second coupling member 47 are not limited thereto.

A third coupling member 17 may be fixed to the inside of the body 10. The third coupling member 17 may be adjacent to the upper wall 12 of the body 10. The third coupling member 17 may be disposed at a position corresponding to the first coupling member 27. However, the position where the third coupling member 17 is disposed is not limited thereto. For example, the third coupling member 17 may be adjacent to the lateral wall 111 of the body pipe 11. The third coupling member 17 may exert an attractive force on the first coupling member 27. For example, the first coupling member 27 may be a ferromagnetic body, and the third coupling member 27 may be a magnet. However, the materials of the first coupling member 27 and the third coupling member 17 are not limited thereto.

A temperature sensor 1031 may be provided in the body 10. The temperature sensor 1031 may be disposed adjacent to the first insertion space 14. The temperature sensor 1031 may be disposed on one side of the body pipe 11. For example, the temperature sensor 1031 may be disposed under the lower wall 112 of the body pipe 11. In a state in which the heater holder 20 is inserted into the first insertion space 14, the temperature sensor 1031 may be disposed adjacent to the heater 50. The temperature sensor 1031 may detect the temperature of an area where the temperature sensor 1031 is disposed and the surroundings thereof. The temperature sensor 1031 may be disposed adjacent to the first insertion space 14, thereby being capable of sensing the temperature of the first insertion space 14 and the surroundings thereof. In the state in which the heater holder 20 is inserted into the first insertion space 14, the temperature sensor 1031 may be disposed adjacent to the heater 50, thereby being capable of sensing the temperature of the heater 50 and the surroundings thereof.

The temperature sensor 1031 may output a signal corresponding to the temperature of the surroundings of the first insertion space 14. For example, the temperature sensor 1031 may include a resistor having a resistance value that changes in response to a change in the temperature of the surroundings of the temperature sensor 1031. The temperature sensor 1031 may be implemented by a thermistor, which is an element that exhibits a change in resistance depending on temperature, or the like. The temperature sensor 1031 may output a signal corresponding to the resistance value of the resistor, as a signal corresponding to the temperature of the inside of the first insertion space 14 and/or the surroundings of the first insertion space 14. The temperature sensor 1031 may output the signal corresponding to the resistance value of the resistor, as a signal corresponding to the temperature of the heater 50 and the surroundings thereof.

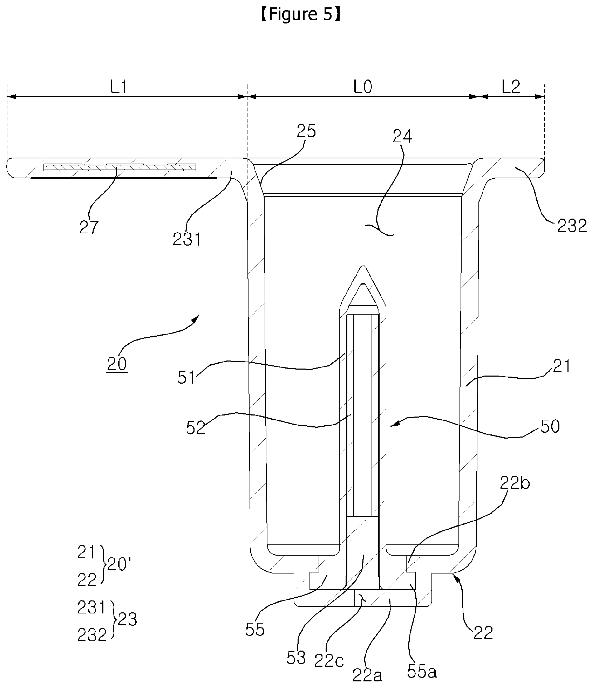

FIG. 5 is a cross-sectional view of the heater holder of the aerosol-generating device according to one embodiment of the present disclosure.

Referring to FIG. 5, a guide part 25 may be formed on the inner circumferential surface of the upper end of the pipe 20'. The guide part 25 may be disposed between the pipe 20' and the extension 23. The guide part 25 may be in contact with the opening of the second insertion space 24. The guide part 25 may extend to be inclined downward. The guide part 25 may extend in the circumferential direction to surround the opening of the second insertion space 24.

Accordingly, the guide part 25 may come into contact with the lower part of the extractor 30 to guide the extractor 30 so as to be easily inserted into the second insertion space 24.

The lower end of the heater 50 may be inserted into the mount 22 to be fixed thereto. The heater 50 may include a heater rod 51. The heater rod 51 may form the appearance of the heater 50. The heater rod 51 may extend vertically. The heater rod 51 may have a cylindrical shape. The heater rod 51 may have a hollow that is open downward. The hollow may extend vertically. The hollow in the heater rod 51 may be formed in a cylindrical shape. The upper end of the heater rod 51 may be tapered upward. The heater rod 51 may have high thermal expansion, excellent thermal insulation, and low thermal conductivity. The heater rod 51 may have high rigidity. For example, the heater rod 51 may be formed of zirconia. However, the material of the heater rod 51 is not limited thereto.

The heater 50 may include a heating part 52. The heating part 52 may be inserted into the hollow in the heater rod 51. The heating part 52 may extend vertically. The heating part 52 may be formed in a cylindrical shape. The heating part 52 may be formed of a resistive metal. Heat generated by the heating part 52 may be transferred to the outside of the heater 50 through the heater rod 51. The heating part 52 may be disposed at a height corresponding to the third insertion space 34 (see FIG. 3). The lower end of the heating part 52 may be adjacent to the lower end of the through hole 35.

The heater 50 may include a support 53. The support 53 may be inserted into the hollow of the heater rod 51. The support 53 may be disposed under the heating part 52. The support 53 may be fixed to the heater rod 51 within the hollow. The support 53 may support the lower portion of the heating part 52. The lower end of the support 53 may be supported by a bottom 22a of the mount 22. A hole 22c formed through the center of the mount 22 may be formed in a process of forming the heater holder 20 by insert injection molding. The width of the hole 22c may be formed to be smaller than the width of the support 53 to prevent separation of the support 53. The hole 22c may be omitted. The support 53 may have high heat resistance. The support 53 may not be thermally deformed by heat generated by the heating part 52. The support 53 may be formed of polyimide. However, the material of the support 53 is not limited thereto.

The heater 50 may include a flange 55. The flange 55 may be formed at the lower end of the heater rod 51. The flange 55 may extend outward in the horizontal direction from the outer circumferential surface of the lower end of the heater rod 51. The flange 55 may extend in the circumferential direction of the heater rod 51. The lower end of the heater rod 51 and the flange 55 may be inserted into the mount 22. The mount 22 may be integrally coupled to the flange 55 by forming the heater holder 20 by insert injection molding using the heater 50 as an insert.

The cross-section of the outer circumferential surface of the flange 55 may have a non-circular shape. The inner circumferential surface of the mount 22 may have a shape corresponding to the outer circumferential surface of the flange 55. The inner circumferential surface of the mount 22 and the outer circumferential surface of the flange may be engaged with each other in the circumferential direction. Accordingly, it is possible to prevent the heater 50 from rotating in the circumferential direction with respect to the heater holder 20 during the process of separating or inserting the stick S from or into the heater 50.

The flange 55 may include a first engaging part 55a. The first engaging part 55a may protrude outward from the perimeter of the flange 55. The first engaging part 55a may be formed at the lower portion of the flange 55. The first engaging part 55a may extend along the perimeter of the flange 55.

The mount 22 may include a second engaging part 22b. The second engaging part 22b may protrude inward toward the hole of the mount 22. The second engaging part 22b may have a shape corresponding to the first engaging part 55a. The first engaging part 55a may be located under the second engaging part 22b. The first engaging part 55a and the second part 55a may be located below the second engaging part 22b. The first engaging part 55a and the second engaging part 22b may overlap each other vertically. The second engaging part 22b may support the first engaging part 55a to prevent the flange 55 from being separated upward from the mount 22.

One side of the extension 23 may extend relatively longer with respect to the pipe 20' or the second insertion space 24. A length L1 of the first extension part 231 may be greater than a length of the second extension part 232 in the horizontal direction. The length L1 of the first extension part 231 may be greater than a diameter L0 of the second insertion space 24. Alternatively, the length L1 of the first extension part 231 may be closer to the diameter L0 of the second insertion space 24 than the length of the second extension part L2. The first coupling member 47 may be fixed horizontally to the first extension part 23.

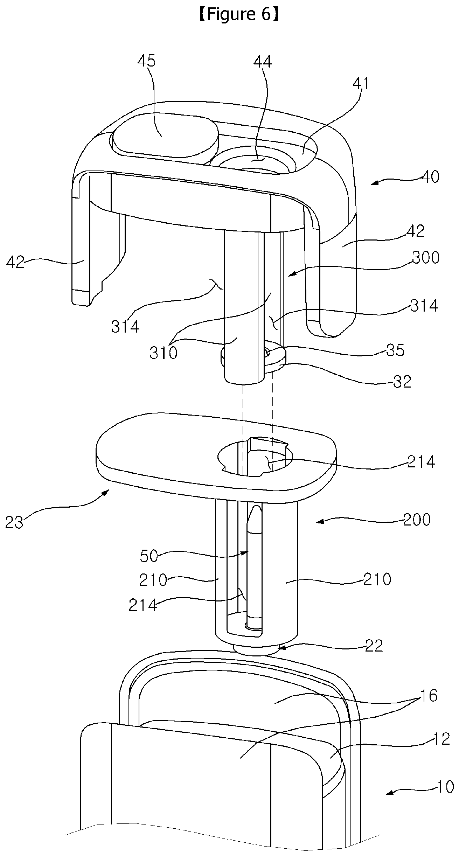

FIG. 6 is an exploded cross-sectional view of an aerosol-generating device according to another embodiment of the present disclosure in a state in which an upper case, a body, and a heater holder are separated.

Referring to FIG. 6, lateral walls 210 of a heater holder 200 and lateral walls 310 of an extractor 300 may define a second insertion space 340 that is open upward. Each of the lateral walls 210 of the heater holder 200 and the lateral walls 310 of the extractor 300 may cover at least one side of the second insertion space 340. The lateral walls 210 of the heater holder 200 and the lateral walls 310 of the extractor 300 may together form the perimeter of the second insertion space 340.

The lateral walls 210 of the heater holder 200 may extend vertically. The lateral walls 310 of the extractor 300 may extend vertically. Each of the lateral walls 210 of the heater holder 200 and the lateral walls 310 of the extractor 300 may be spaced apart from the center of the second insertion space 340 by the same distance in the radial direction. Each of the lateral walls 210 of the heater holder 200 and the lateral walls 310 of the extractor 300 may be located on the same perimeter extension line of the second insertion space 340. Each of the lateral walls 210 of the heater holder 200 and the lateral walls 310 of the extractor 300 may extend to be curved in the circumferential direction along the perimeter of the second insertion space 340.

The lateral walls 210 of the heater holder 200 may be arranged in plural along the circumference of a lower wall 22 of the heater holder 200. First slits 214 that are open upward and extend vertically may be formed between the plurality of lateral walls 210 of the heater holder 200. The plurality of lateral walls 210 and the plurality of first slits 214 of the heater holder 200 may be arranged alternately in the circumferential direction along the perimeter of the second insertion space 340.

The lateral walls 310 of the extractor 300 may be arranged in plural along the circumference of a lower wall 32 of the extractor 300. Second slits 314 that extend vertically may be formed between the plurality of lateral walls 310 of the extractor 300. The plurality of lateral walls 310 and the plurality of second slits 314 of the extractor 300 may be arranged alternately in the circumferential direction along the perimeter of the second insertion space 340.

The extractor 300 may be inserted into the heater holder 200. When the extractor 300 is inserted into the heater holder 200, the lateral walls 210 of the heater holder 200 may be disposed in the second slits 314, and the lateral walls 310 of the extractor 300 may be disposed in the first slits 214.

Accordingly, the lateral walls 210 of the heater holder 200 and the lateral walls 310 of the extractor 300 may form the second insertion space 340. In addition, the heat generation efficiency of a heater 50 may be improved by reducing the thickness of a wall between an induction coil 15 and the heater 50.

The lower wall 32 of the extractor 300 may cover the lower portion of the second insertion space 340. The lower wall 22 of the heater holder 200 may be disposed below the lower wall 32 of the extractor 300 and cover the lower surface of the lower wall 32 of the extractor 300. The heater 50, which is fixed to the lower wall 22 of the heater holder 200 and protrudes, may pass through a through hole 35 formed through the lower wall 32 of the extractor 300 and be exposed to the second insertion space 340.

The lower wall 222 of the heater holder 200 may be spaced upward from a lower wall 112 of a body pipe 11. An air gap may be formed between the lower wall 22 of the heater holder 200 and the lower wall 112 of the body pipe 11. The lower wall 32 of the extractor 300 may be spaced upward from the lower wall 22 of the heater holder 200. An air gap may be formed between the lower wall 32 of the extractor 300 and the lower wall 22 of the heater holder 200. Part of heat generated by the heater 50 may be transferred from the lower wall 22 to the lateral walls 210 of the heater holder 200 and then transferred to the lower wall 112 and a lateral wall 111 of the body pipe 11, and thereby, the heat may be dispersed. In addition, part of the heat generated by the heater 50 may be dispersed through the air gap formed between the heater holder 200 and the extractor 300 around the heater 50.

Accordingly, the amount of the heat generated by the heater 50 that is conducted to components in the aerosol-generating device may be reduced, and failure of the aerosol-generating device may be prevented. In addition, the amount of the heat generated by the heater 50 that is conducted to the outside of the aerosol-generating device may be reduced, thereby reducing heat transfer to a user.

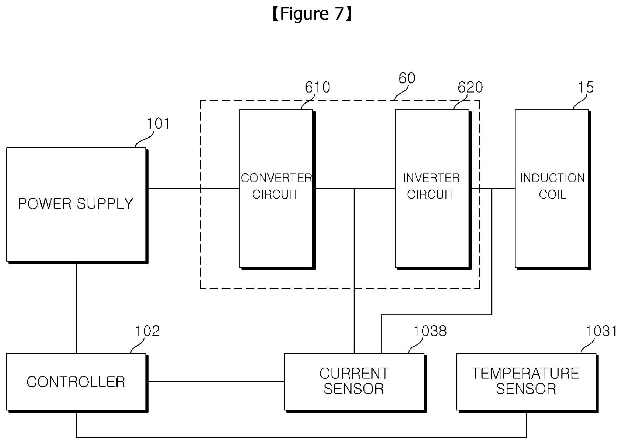

FIG. 7 is a diagram of a circuit for driving the induction coil of the aerosol-generating device according to one embodiment of the present disclosure.

Referring to FIG. 7, the aerosol-generating device 1 may include at least one of the power supply 101, the controller 102, the induction coil 15, a coil driving circuit 60, the temperature sensor 1031, and a current sensor 1038.

The induction coil 15 may surround the first insertion space 14. The induction coil 15 may be wound around the lateral wall 111 of the body pipe 11 (see FIGs. 3 and 4). The induction coil 15 may surround the heater 50 inserted into the first insertion space 14. The induction coil 15 may heat the heater 50. The heater 50 may be a susceptor, and the heater 50 may be heated by a magnetic field generated by an AC flowing through the induction coil 15. The magnetic field may pass through the heater 50, and generate an eddy current. The current may generate heat in the heater 50.

The power supply 101 may supply power to the induction coil 15. The power supply 101 may supply power to the induction coil 15 under the control of the controller 102.

The coil driving circuit 60 may be electrically connected to the induction coil 15, the power supply 101, and the controller 102. The coil driving circuit 60 may supply power output from the power supply 101 to the induction coil 15 under the control of the controller 102.

The coil driving circuit 60 may include at least one of a first circuit 610 and a second circuit 620. The coil driving circuit 60 may supply or apply power of a specific frequency to the induction coil 15 through the first circuit 610 and the second circuit 620.

The first circuit 610 may convert voltage output from the power supply 101. The first circuit 610 may have one side connected to the power supply 101 and the other side connected to the second circuit 620. The first circuit may be called a converter circuit. For example, the converter circuit 610 may be implemented as a buck-converter, a boost converter, a buck-booster converter, or the like, and convert the voltage output from the power supply 101.

The second circuit 620 may convert the converted power output from the converter circuit 610 into an alternating current of a specific frequency. The second circuit 620 may have one side connected to the converter circuit 610 and the other side connected to the induction coil 15. The second circuit may be called an inverter circuit. For example, the inverter circuit 620 may be implemented as a full-bridge circuit including a plurality of switching elements, or the like, and convert DC power into AC power of a specific frequency.

The current sensor 1038 may measure at least one of the current of the power output from the converter circuit 610 and the current of the power output from the inverter circuit 620. The current sensor 1038 may measure at least one of the DC output from the converter circuit 610 and the AC output from the inverter circuit 620.

The temperature sensor 1031 may be disposed adjacent to the heater 50. In the state in which the heater holder 20 or 200 is inserted into the first insertion space 14, the temperature sensor 1031 may be disposed adjacent to the heater 50 to detect the temperature of the heater 50 and the surroundings thereof.

The controller 102 may determine a reference impedance parameter based on a signal received from the temperature sensor 1031. The controller 102 may determine a reference heater temperature based on the signal received from the temperature sensor 1031, and determine the reference impedance parameter based on the determined reference heater temperature.

The controller 102 may control power applied to the induction coil 15. The controller 102 may control the power supply 101 to supply power to the induction coil 15. The controller 102 may control the converter circuit 610 and the inverter circuit 620 to apply AC power having a frequency for inductively heating the heater 50 to the induction coil 15.

The controller 102 may determine an impedance-related parameter of the heater 50 based on a current value flowing through the induction coil 15. The controller 102 may calculate the current value flowing through the induction coil 15 based on a signal received from the current sensor 1038. The controller 102 may determine the impedance-related parameter of the heater 50 based on the calculated current value. The impedance-related parameter may be, for example, an impedance or an apparent resistance value of the heater 50.

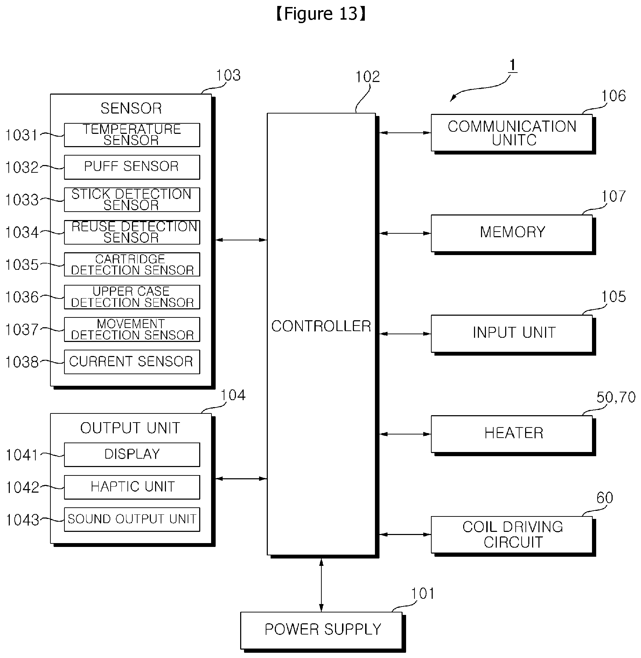

For example, the controller 102 may determine the impedance-related parameter of the heater 50 based on the current output from the converter circuit 610. The controller 102 may determine the impedance-related parameter of the heater 50 based on a DC value output from the converter circuit 610. For example, the controller 102 may determine the impedance-related parameter of the heater 50 based on the current output from the inverter circuit 620. The controller 102 may determine the impedance-related parameter of the heater 50 based on an AC value output from the inverter circuit 620. At least one of matching information between the DC value output from the converter circuit 610 and the impedance-related parameter of the heater 50 and matching information between the AC value output from the inverter circuit 620 and the impedance-related parameter of the heater 50 may be stored in a memory 107 (see FIG. 13). A matching relationship between the DC value output from the converter circuit 610 and the impedance-related parameter of the heater 50 and a matching relationship between the AC value output from the inverter circuit 620 and the impedance-related parameter of the heater 50 may be calculated in advance through experiments, etc. and stored in the memory 107.

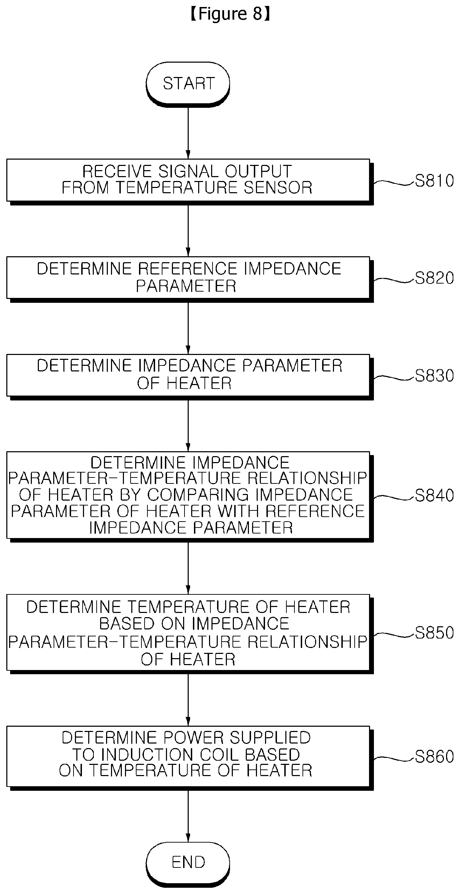

The controller 102 may control the power supply 101 to apply or supply power to the induction coil 15 and/or the heater 50 based on the reference impedance parameter and the determined impedance-related parameter of the heater 50. The controller 102 may control the power supply 101 to apply or supply power to the induction coil 15 and/or the heater 50, so that the heater 50 is heated to the same temperature as a target temperature or a temperature close to the target temperature. The feature of the controller 102 that applies or supplies power to the induction coil 15 and/or the heater 50 based on the reference impedance parameter and the determined impedance-related parameter of the heater 50 will be described in detail later with reference to FIGs. 8 to 12.

The controller 102 may calculate a resonance frequency for inductively heating the heater 50, and control the coil driving circuit 60 to apply power to the induction coil 15, thereby being capable of inductively heating the heater 50. The controller 102 may determine power to be applied to the induction coil 15, and control the coil driving circuit 60 to apply power to the induction coil 15, thereby being capable of inductively heating the heater 50.

Although FIG. 7 illustrates the coil driving circuit 60 as a separate component from the power supply 101, the coil driving circuit 60 may be included in the power supply 101.

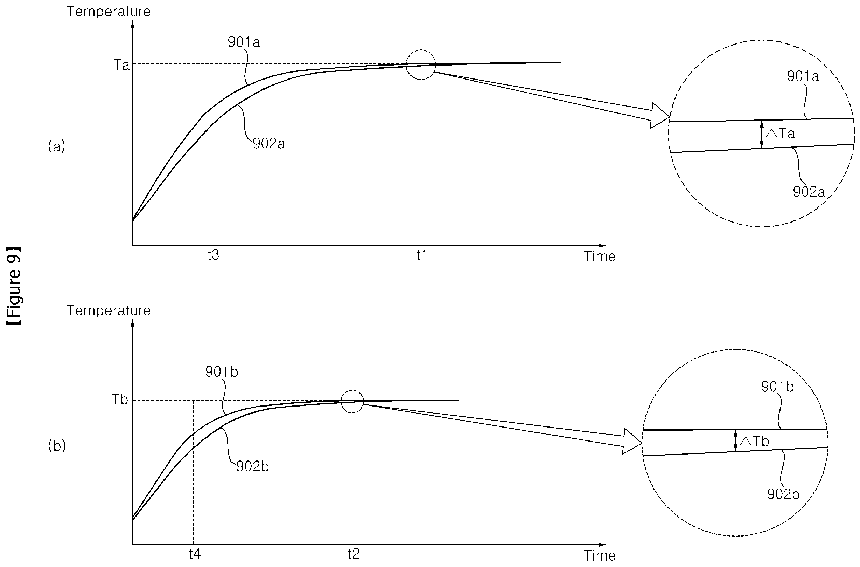

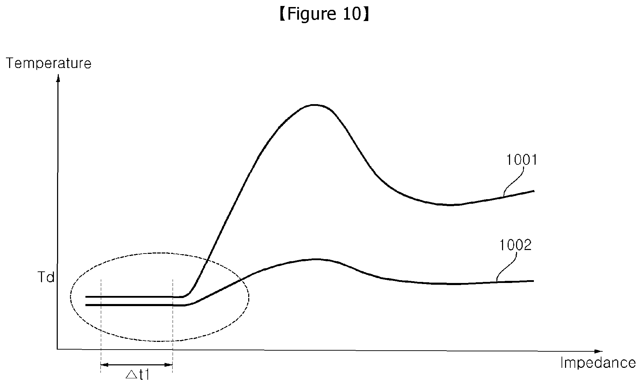

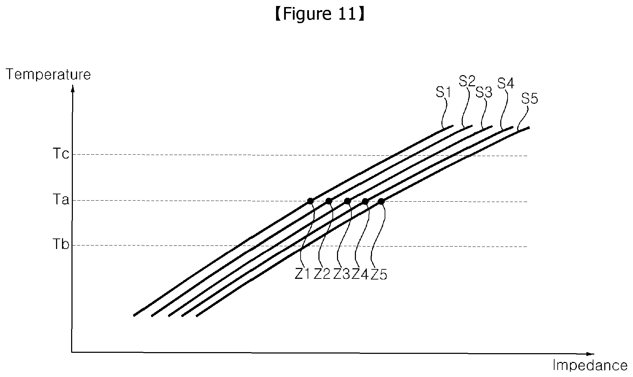

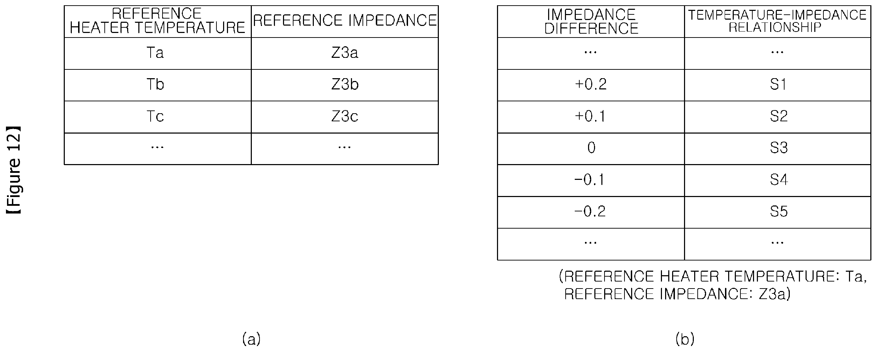

FIG. 8 is a flowchart illustrating heater heating control using the induction coil of the aerosol-generating device according to one embodiment of the present disclosure, FIG. 9 is a graph illustrating a temperature change depending on power application to a separation type heater of the aerosol-generating device according to one embodiment of the present disclosure, FIG. 10 is a graph illustrating impedances of separation type heaters of the aerosol-generating device according to one embodiment of the present disclosure, FIG. 11 is a graph illustrating temperature changes measured by temperature sensors depending on temperature changes of the heaters of the aerosol-generating device according to one embodiment of the present disclosure, and FIG. 12 is a table illustrating a heater temperature-impedance relationship depending on a difference between the impedance of the separation type heater of the aerosol-generating device according to one embodiment of the present disclosure and the reference impedance.

Referring to FIGs. 8 and 9, the controller 102 may receive a signal output from the temperature sensor 1031 (S810). Reference information including a matching relationship among the signal output from the temperature sensor 1031, a reference heater temperature, and the reference impedance parameter may be stored in the memory 107. Here, the reference heater temperature may mean the actual temperature of a reference heater corresponding to the signal received from the temperature sensor 1031 in a state in which the reference heater is coupled to the body 10.

The actual temperature of the reference heater, the output signal of the temperature sensor 1031, and the impedance parameter of the reference heater may be measured in advance through experiments, etc. and stored in the memory 107. Here, the reference impedance parameter may mean an impedance or an apparent resistance value of the reference heater at the reference heater temperature.

In the aerosol-generating device 1 using a separation type heater, the heater 50 operating as a susceptor may have a different impedance parameter from other heaters. Even if heaters 50 are manufactured to the same specifications and/or using the same material, the characteristics of the heaters 50, such as an impedance, may be different due to various reasons including a production process. For example, the impedance parameter of the heater 50 may vary slightly due to dimensional errors in the shape, such as the length and thickness of the heater 50, which may occur during manufacturing. For example, the impedance parameter of the heater 50 may vary due to errors in the ratio of components that form the alloy of the heater 50. This is only an example, and factors influencing the impedance-related parameter of the heater 50 are not limited to those described above.

If the same power is applied to heaters, temperatures 901a and 901b of a first heater may vary differently from temperatures 902a and 902b of a second heater. For example, as illustrated in the upper graph of FIG. 9, after first power P1 of a constant magnitude has been applied to the heaters, the first heater may reach a target temperature Ta at a point in time when a time t1 has elapsed. In contrast, the second heater may reach a temperature Ta-delta Ta, which is lower than the target temperature Ta, at the point in time when the time t1 has elapsed after the same first power P1 has been applied. For example, as illustrated in the lower graph of FIG. 9, after second power P2 of a constant magnitude has been applied to the heaters, the first heater may reach a target temperature Tb at a point in time when a time t2 has elapsed. In contrast, the second heater may reach a temperature Tb-delta Tb, which is lower than the target temperature Ta, at the point in time when the time t2 has elapsed after the same second power P2 has been applied.

However, it is difficult to actually measure and use the temperatures of all heaters. Therefore, the aerosol-generating device 1 according to one embodiment of the present disclosure uses a heater serving as a reference, matches the measurement signal of the temperature sensor 1031, the actual temperature of the reference heater, and the impedance parameter of the reference heater at the corresponding temperature, and utilizes the same as reference information.

Referring to FIG. 10 together with FIG. 8, the controller 102 may determine the reference impedance parameter based on the signal received from the temperature sensor 1031 (S820). The controller 102 may determine the reference heater temperature by comparing the signal received from the temperature sensor 131 with the reference information stored in the memory 107. The controller 102 may determine the reference impedance parameter corresponding to the determined reference heater temperature.

The controller 102 may determine the reference heater temperature and the reference impedance parameter, if a predetermined condition is satisfied. Here, the predetermined condition may be a condition in which the reference heater temperature is a first temperature or lower, or a condition in which the reference heater temperature is maintained within a predetermined temperature range for a first time or longer.

Even if the temperature sensor 1031 is disposed adjacent to the heater 50 accommodated in the first insertion space 14, the temperature sensor 1031 does not directly contact the heater 50. If a temperature 1001 (see FIG. 10) of the heater 50 rapidly rises or falls above a certain level, a temperature 1002 (see FIG. 10) measured by the temperature sensor 1031 may not rapidly change in response to the change in the temperature 1001 of the heater 50. Therefore, the temperature measured by the temperature sensor 1031 may not accurately reflect the temperature of the heater 50, depending on the situation.

The controller 102 may compare the determined reference heater temperature with the first temperature Td, and determine the reference impedance parameter corresponding to the reference heater temperature based on the reference heater temperature being the first temperature Td or lower. The first temperature Td may be room temperature or a temperature that is not higher than room temperature by a predetermined degree or more. For example, the first temperature Td may be 40 degrees or lower. If the determined reference heater temperature is higher than the first temperature Td, the corresponding reference heater temperature may not accurately reflect the temperature of the heater 50.

If the repeatedly determined reference heater temperature is maintained within a predetermined temperature range for the first time delta_t1 or longer, the controller 102 may determine the reference impedance parameter corresponding to the reference heater temperature. For example, the predetermined temperature range may be 5 degrees or smaller. If the determined reference heater temperature is not maintained within the predetermined temperature range for the first time delta_t1 or longer, the corresponding reference heater temperature may not accurately reflect the temperature of the heater 50.

Accordingly, the reference heater temperature and the reference impedance parameter may be determined if the predetermined condition is satisfied, and thereby, the reference impedance parameter may be accurately determined.

The controller 102 may determine the reference heater temperature and the reference impedance parameter based on the signal output from the temperature sensor 1031. However, the controller 102 may monitor the temperature of the heater 50 based on the impedance parameter of the heater 50.

As the heater 50 is heated, if the temperature of the heater 50 changes relatively rapidly, it is difficult for the signal output from the temperature sensor 1031 to accurately reflect the temperature of the heater 50. Therefore, the signal output from the temperature sensor 1031 may be utilized to determine the reference heater temperature and the reference impedance parameter, and the temperature of the heater 50 may be determined based on the impedance parameter of the heater 50, thereby being capable of accurately determining the temperature and temperature change of the heater.

Referring to FIG. 8 again, the controller 102 may determine the impedance parameter of the heater 50 (S830). The controller 102 may determine the impedance parameter of the heater 50 based on a current value flowing through the induction coil 15. The controller 102 may calculate the current value flowing through the induction coil 15 based on a signal received from the current sensor 1038. The controller 102 may determine the impedance parameter of the heater 50 based on the calculated current value. For example, the controller 102 may determine the impedance parameter of the heater 50 based on current output from the converter circuit 610. For example, the controller 102 may determine the impedance parameter of the heater 50 based on current output from the inverter circuit 620.

Referring to FIGs. 11 and 12 together with FIG. 8, the controller 102 may determine a relationship between the impedance parameter of the heater 50 and temperature by comparing the impedance parameter of the heater 50 with the reference impedance parameter (S840). The reference impedance parameter Z3 may be any one of the impedance parameters Z1, Z2, Z3, Z4, and Z5 of a plurality of heaters 50 at the reference heater temperature Ta. The controller 102 may calculate a difference between the impedance parameter of the heater 50 and the reference impedance parameter Z3 by comparing the determined impedance parameter of the heater 50 with the reference impedance parameter Z3. The controller 102 may determine an impedance parameter-temperature relationship curve corresponding to the calculated difference. For example, referring to FIG. 12, if the difference between the impedance parameter of the heater 50 and the reference impedance parameter Z3a is +0.2 at the reference heater temperature Ta, an impedance parameter-temperature relationship curve S1 of the heater 50 corresponding to such a difference may be determined. For example, referring to FIG. 12, if the difference between the impedance parameter of the heater 50 and the reference impedance parameter Z3a is -0.2 at the reference heater temperature Ta, an impedance parameter-temperature relationship curve S5 of the heater 50 corresponding to such a difference may be determined.

The reference information may include a reference table or reference curve S3 information in which the reference impedance parameter of the reference heater matches the temperature of the reference heater. The reference information may include impedance parameter-temperature relationship tables or impedance parameter-temperature relationship curves S1, S2, S4, and S5 of various heaters having different impedance parameters from the reference impedance parameter of the reference heater at the same temperature. The impedance parameter-temperature relationship may be utilized to determine the temperature and/or temperature change of the heater 50. If it is possible to extract the impedance parameter of the heater 50, the temperature and/or temperature change of the heater 50 may be accurately determined or monitored by comparing the extracted impedance parameter with the impedance parameter-temperature relationship.

The aerosol-generating device 1 according to one embodiment of the present disclosure may determine the temperature and reference impedance parameter of the reference heater based on a signal measured by the temperature sensor 1031, and determine temperature-dependent impedance parameter characteristics of the heater 50 by comparing the impedance parameter of the heater 50 determined based on the current value of the induction coil 15 with the reference impedance parameter, thereby being capable of accurately determining the temperature-dependent impedance parameter characteristics of the heater 50.

Referring again to FIG. 8, the controller 102 may determine the temperature of the heater 50 based on the impedance parameter and temperature relationship of the heater 50 (S850). The controller 102 may repeatedly determine the impedance parameter of the heater 50 at each set time within at least one heating section. The controller 102 may determine the impedance parameter of the heater 50 by applying a first voltage of a constant magnitude to the induction coil 15 for a predetermined time and receiving a current value flowing through the induction coil 15 from the current sensor 1038, at each set time. This section may be referred to as a parameter measurement section. The controller 102 may allocate a plurality of parameter measurement sections within an induction heating section, and determine the impedance parameter of the heater 50 at each parameter measurement section. The controller 102 may determine the temperature of the heater 50 by comparing the impedance parameter of the heater 50 with the impedance parameter-temperature relationship of the heater 50.

Accordingly, the impedance parameter of the heater 50 may be accurately measured by applying the voltage of the constant magnitude to the heater 50 and measuring the current value flowing through the induction coil 15.

The impedance parameter of the heater 50 may change as the temperature changes. For example, as the temperature of the heater 50 rises, the impedance parameter of the heater 50 may increase correspondingly. The controller 102 may repeatedly determine the impedance parameter of the heater 50 at each set time, and determine the temperature of the heater 50, thereby being capable of accurately determining or monitoring the temperature and/or temperature change of the heater 50.

The controller 102 may determine power supplied to the induction coil 15 based on the temperature of the heater 50 (S860). The controller 102 may determine the power to be applied to the induction coil 15 to heat the heater 50. The reference information may include a matching relationship between a target heating temperature of the heater 50 and the power to be applied to the induction coil 15. The controller 102 may determine set power corresponding to the target temperature of the heater 50 based on the reference information stored in the memory 107. The controller 102 may control the power supply 101 to apply the determined power to the induction coil 15. The controller 102 may continuously monitor the temperature of the heater 50 that changes as the heater 50 is heated, and control the power applied to the induction coil 15 based on the temperature and target temperature of the heater 50, thereby being capable of accurately heating the heater 50 to the target temperature.

Accordingly, even if there is a deviation between separation type heaters, heating of the heater may be accurately controlled.

Furthermore, in the process of S830, the controller 102 may control the power supply 101 to cut off the power applied to the induction coil 15 based on the impedance parameter of the heater 50. Before inductively heating the heater 50, the controller 102 may control the power supply 101 to cut off the power applied to the induction coil 15 based on the impedance parameter of the heater 50.

The reference information stored in the memory 107 may include information on an upper limit value and a lower limit value of the impedance parameter. Here, the upper limit value of the impedance parameter may correspond to the maximum value of the impedance parameter of the heater 50 that is usable in or compatible with the aerosol-generating device 1. The lower limit value of the impedance parameter may correspond to the minimum value of the impedance parameter of the heater 50 that is usable or compatible with the aerosol-generating device 1. The upper limit value and lower limit value information of the impedance parameter may correspond to the maximum value and minimum value of the impedance parameter that the heater 50 may have at room temperature or a temperature within a set range from room temperature.

The controller 102 may compare the impedance parameter of the heater 50 with at least one of the lower limit value and upper limit value of the impedance parameter. The controller 102 may control the power supply 101 to cut off the power applied to the induction coil 15, based on the impedance parameter being the lower limit value of the impedance parameter or less or being the upper limit value of the impedance parameter or greater.

Accordingly, it is possible to prevent a heater that is not compatible with the aerosol-generating device from being used, based on the impedance parameter of the heater 50.

FIG. 13 is a block diagram of an aerosol-generating device 1 according to an embodiment of the present disclosure.

The aerosol-generating device 1 may include a power supply 101, a controller 102, a sensor 103, an output unit 104, an input unit 105, a communication unit 107, a memory 107, one or more heaters 50 and 70, and coil driving circuit 60. However, the internal structure of the aerosol-generating device 1 is not limited to that shown in FIG. 13. That is, it is to be understood by those skilled in the art that some of the components shown in FIG. 13 may be omitted or new components may be added depending on the design of the aerosol-generating device 1.

The sensor 103 may detect the state of the aerosol-generating device 1 or the state of the surrounding of the aerosol-generating device 1 and may transmit information about the detected state to the controller 102. Based on the information about the detected state, the controller 102 may control the aerosol-generating device 1 to perform various functions, such as control of operation of the cartridge heater 70 and/or the heater 50, smoking restriction, determination as to whether the stick S and/or the cartridge is inserted, and notification display.

The sensor 103 may include at least one of a temperature sensor 1031, a puff sensor 1032, a stick detection sensor 1033, a reuse detection sensor 1034, a cartridge detection sensor 1035, an upper case detection sensor 1036, a movement detection sensor 1037 or a current sensor 1038.

The temperature sensor 1031 may detect temperature to which the cartridge heater 70 and/or the heater 50 is heated. The aerosol-generating device 1 may include a separate temperature sensor configured to detect the temperature of the cartridge heater 70 and/or the heater 50, or the cartridge heater 70 and/or the heater 50 itself may serve as a temperature sensor.

The temperature sensor 1031 may output a signal corresponding to the temperature of the cartridge heater 70 and/or the heater 50. For example, the temperature sensor 1031 may include a resistive element that changes in resistance value according to a change in temperature of the cartridge heater 70 and/or the heater 50. The temperature sensor may be implemented as a thermistor, which is an element characterized in that the resistance thereof changes with temperature. In this case, the temperature sensor 1031 may output a signal corresponding to the resistance value of the resistive element as a signal corresponding to the temperature of the cartridge heater 70 and/or the heater 50. For example, the temperature sensor 1031 may be configured as a sensor configured to detect the resistance value of the cartridge heater 70 and/or the heater 50. In this case, the temperature sensor 1031 may output a signal corresponding to the resistance value of the cartridge heater 70 and/or the heater 50 as a signal corresponding to the temperature of the cartridge heater 70 and/or the heater 50.

The temperature sensor 1031 may be disposed around the power supply 101 to monitor the temperature of the power supply 101. The temperature sensor 1031 may be disposed adjacent to the power supply 101. For example, the temperature sensor 1031 may be attached to one surface of the battery, which is the power supply 101. For example, the temperature sensor 1031 may be mounted on one surface of a printed circuit board.

The temperature sensor 1031 may be disposed in the body 10 to detect the internal temperature of the body 10.

The puff sensor 1032 may detect a user puff based on various physical changes in a gasflow path. The puff sensor 1032 may output a signal corresponding to a puff. For example, the puff sensor 1032 may be a pressure sensor. The puff sensor 1032 may output a signal corresponding to the internal pressure of the aerosol-generating device. Here, the internal pressure of the aerosol-generating device 1 may correspond to the pressure of the gasflow path through which gas flows. The puff sensor 1032 may be disposed at a position corresponding to the gasflow path through which gas flows in the aerosol-generating device 1.

The stick detection sensor 1033 may detect insertion and/or removal of the stick S. The stick detection sensor may be referred to as an insertion detection sensor. The insertion detection sensor 1033 may detect a signal change caused by insertion and/or removal of the stick S. The insertion detection sensor 1033 may be mounted around the insertion space. The insertion detection sensor 1033 may detect insertion and/or removal of the stick S according to a change in dielectric constant in the insertion space. For example, the insertion detection sensor 1033 may be an inductive sensor and/or a capacitance sensor.

The inductive sensor may include at least one coil. The coil of the inductive sensor may be disposed adjacent to the insertion space. For example, if a magnetic field changes around a coil through which current flows, the characteristics of the current flowing through the coil may change according to Faraday's law of electromagnetic induction. Here, the characteristics of the current flowing through the coil may include a frequency of alternating current, a current value, a voltage value, an inductance value, an impedance value, and the like.

The inductive sensor may output a signal corresponding to the characteristics of the current flowing through the coil. For example, the inductive sensor may output a signal corresponding to the inductance value of the coil.

The capacitance sensor may include a conductive body. The conductive body of the capacitance sensor may be disposed adjacent to the insertion space. The capacitance sensor may output a signal corresponding to the electromagnetic characteristics of the surroundings, for example, the capacitance around the conductive body. For example, if the stick S including a metallic wrapper is inserted into the insertion space, the electromagnetic characteristics around the conductive body may change due to the wrapper of the stick S.

The reuse detection sensor 1034 may detect whether the stick S is being reused. The reuse detection sensor 1034 may be a color sensor. The color sensor may detect the color of the stick S. The color sensor may detect the color of a portion of the wrapper surrounding the outer side of the stick S. The color sensor may detect, based on light reflected from an object, a value for the optical characteristic corresponding to the color of the object. For example, the optical characteristic may be the wavelength of light. The color sensor may be implemented as a component integrated with a proximity sensor or may be implemented as a component provided separately from a proximity sensor.

At least a portion of the wrapper constituting the stick S may change in color due to an aerosol. The reuse detection sensor 1034 may be disposed at a position corresponding to a position at which at least a portion of the wrapper, which changes in color due to an aerosol, is disposed when the stick S is inserted into the insertion space. For example, before the stick S is used by the user, the color of at least a portion of the wrapper may be a first color. In this case, while the aerosol generated by the aerosol-generating device 1 passes through the stick S, at least a portion of the wrapper may become wet due to the aerosol, and accordingly, the color of at least a portion of the wrapper may change to a second color. After changing from the first color to the second color, the color of at least a portion of the wrapper may be maintained in the second color.

The cartridge detection sensor 1035 may detect mounting and/or removal of the cartridge. The cartridge detection sensor 1035 may be implemented as an inductance-based sensor, a capacitive sensor, a resistance sensor, a Hall sensor (or Hall IC) using the Hall effect, etc.

The upper case detection sensor 1036 may detect mounting and/or removal of the upper case. When the upper case is separated from the body 10, the cartridge and the portion of the body 10 that have been covered by the upper case may be exposed to the outside. The upper case detection sensor 1036 may be implemented as a contact sensor, a Hall sensor (or Hall IC), an optical sensor, etc.

The movement detection sensor 1037 may detect movement of the aerosol-generating device. The movement detection sensor 1037 may be implemented as at least one of an acceleration sensor or a gyro sensor.

The current sensor 1038 may measure current inside the aerosol generator. The current sensor 1038 may measure at least one of the current of the power output from the converter circuit 610 and the current of the power output from the inverter circuit 620

In addition to the sensors 1031 to 1038 described above, the sensor 103 may further include at least one of a humidity sensor, a barometric pressure sensor, a magnetic sensor, a position sensor (GPS), or a proximity sensor. The functions of the sensors could be intuitively deduced by those skilled in the art from the names thereof, and thus detailed descriptions thereof will be omitted.

The output unit 104 may output information about the state of the aerosol-generating device 1 and may provide the information to the user. The output unit 104 may include at least one of a display 1041, a haptic unit 1042, or a sound output unit 1043. However, the disclosure is not limited thereto. If the display 1041 and a touchpad form a touchscreen together in a layered structure, the display 1041 may be used as not only an output device but also an input device.

The display 1041 may visually provide information about the aerosol-generating device 1 to the user. For example, the information about the aerosol-generating device 1 may include various pieces of information, such as a charging/discharging state of the power supply 101 of the aerosol-generating device 1, a preheating state of the heater 50, an insertion/removal state of the stick S and/or the cartridge, a mounting/removal state of the upper case, and a use restriction state of the aerosol-generating device 1 (e.g., detection of an abnormal article), and the display 1041 may output the information to the outside. For example, the display 1041 may be in the form of a light-emitting diode (LED) device. For example, the display 1041 may be a liquid crystal display panel (LCD), an organic light-emitting display panel (OLED), or the like.

The haptic unit 1042 may convert an electrical signal into mechanical stimulation or electrical stimulation to haptically provide the information about the aerosol-generating device 1 to the user. For example, if initial power is supplied to the cartridge heater 70 and/or the heater 50 for a predetermined amount of time, the haptic unit 1042 may generate vibration corresponding to completion of initial preheating. The haptic unit 1042 may include a vibration motor, a piezoelectric element, or an electrical stimulation device.

The sound output unit 1043 may audibly provide information about the aerosol-generating device 1 to the user. For example, the sound output unit 1043 may convert an electrical signal into an acoustic signal and may output the acoustic signal to the outside.

The power supply 101 may supply power used for operation of the aerosol-generating device 1. The power supply 101 may supply power so that the cartridge heater 70 and/or the heater 50 is heated. In addition, the power supply 101 may supply power necessary for operation of the other components provided in the aerosol-generating device 1, such as the sensor 103, the output unit 104, the input unit 105, the communication unit 107, and the memory 107. The power supply 101 may be a rechargeable battery or a disposable battery. For example, the power supply 101 may be a lithium polymer (LiPoly) battery. However, the disclosure is not limited thereto.

Although not shown in FIG. 13, the aerosol-generating device 1 may further include a power supply protection circuit. The power supply protection circuit may be electrically connected to the power supply 101 and may include a switching element.

The power supply protection circuit may block an electric path to the power supply 101 according to a predetermined condition. For example, the power supply protection circuit may block the electric path to the power supply 101 when the voltage level of the power supply 101 is equal to or higher than a first voltage corresponding to overcharge. For example, the power supply protection circuit may block the electric path to the power supply 101 when the voltage level of the power supply 101 is lower than a second voltage corresponding to overdischarge.

The heater 50 may receive power from the power supply 101 to heat the medium or the aerosol-generating substance in the stick S. Although not shown in FIG. 13, the aerosol-generating device 1 may further include a power conversion circuit (e.g., DC-to-DC converter) configured to convert the power of the power supply 101 and supply the converted power to the cartridge heater 70 and/or the heater 50. In addition, if the aerosol-generating device 1 generates an aerosol in an induction heating way, the aerosol-generating device 1 may further include a DC-to-AC converter configured to convert direct current power of the power supply 101 into alternating current power.

The controller 102, the sensor 103, the output unit 104, the input unit 105, the communication unit 107, the memory 107 and the coil driving circuit 60 may perform functions using power received from the power supply 101. Although not shown in FIG. 13, the aerosol-generating device may further include a power conversion circuit configured to convert the power of the power supply 101 and supply the converted power to the respective components, for example, a low dropout (LDO) circuit or a voltage regulator circuit. In addition, although not shown in FIG. 13, a noise filter may be provided between the power supply 101 and the heater 50. The noise filter may be a low-pass filter. The low-pass filter may include at least one inductor and a capacitor. The cutoff frequency of the low-pass filter may correspond to the frequency of a high-frequency switching current applied from the power supply 101 to the heater 50. The low-pass filter may prevent high-frequency noise components from being applied to the sensor 103, for example, the insertion detection sensor 1033.

In an embodiment, the cartridge heater 70 and/or the heater 50 may be formed of any suitable electrically resistive material. For example, the suitable electrically resistive material may be a metal or a metal alloy including titanium, zirconium, tantalum, platinum, nickel, cobalt, chromium, hafnium, niobium, molybdenum, tungsten, tin, gallium, manganese, iron, copper, stainless steel, or nichrome. However, the disclosure is not limited thereto. In addition, the heater 50 may be implemented as a metal wire, a metal plate on which an electrically conductive track is disposed, or a ceramic heating element. However, the disclosure is not limited thereto.

In another embodiment, the heater 50 may be an induction heater. For example, the heater 50 may include a susceptor configured to generate heat through a magnetic field applied by a coil, thereby heating the aerosol-generating substance.

The input unit 105 may receive information input from the user or may output information to the user. For example, the input unit 105 may be a touch panel. The touch panel may include at least one touch sensor configured to detect touch. For example, the touch sensor may include a capacitive touch sensor, a resistive touch sensor, a surface acoustic wave touch sensor, an infrared touch sensor, etc. However, the disclosure is not limited thereto.

The display 1041 and the touch panel may be implemented as an integrated panel. For example, the touch panel may be inserted into the display 1041 (on-cell type touch panel or in-cell type touch panel). For example, the touch panel may be added onto the display 1041 (add-on type touch panel).

Meanwhile, the input unit 105 may include a button, a keypad, a dome switch, a jog wheel, a jog switch, etc. However, the disclosure is not limited thereto.

The memory 107 may be hardware storing various pieces of data processed in the aerosol-generating device 1. The memory 107 may store data processed and to be processed by the controller 102. The memory 107 may include at least one type of storage medium among a flash memory type memory, a hard disk type memory, a multimedia card micro type memory, a card type memory (e.g., SD or XD memory), a random access memory (RAM), a static random access memory (SRAM), a read-only memory (ROM), an electrically erasable programmable read-only memory (EEPROM), a programmable read-only memory (PROM), a magnetic memory, a magnetic disk, and an optical disc. The memory 107 may store data on an operation time of the aerosol-generating device 1, the maximum number of puffs, the current number of puffs, at least one temperature profile, and the user's smoking pattern.

The communication unit 107 may include at least one component for communication with other electronic devices. For example, the communication unit 107 may include at least one of a short-range communication unit or a wireless communication unit.

The short-range communication unit may include a Bluetooth communication unit, a Bluetooth low energy (BLE) communication unit, a near-field communication unit, a WLAN (Wi-Fi) communication unit, a Zigbee communication unit, an infrared data association (IrDA) communication unit, a Wi-Fi direct (WFD) communication unit, an ultra-wideband (UWB) communication unit, an Ant+ communication unit, etc. However, the disclosure is not limited thereto.

The wireless communication unit may include a cellular network communication unit, an Internet communication unit, a computer network (e.g., LAN or WAN) communication unit, etc. However, the disclosure is not limited thereto.

The coil driving circuit 60 may supply power output from the power supply 101 to the induction coil 15 under the control of the controller 102. The coil driving circuit 60 may include the features of the coil driving circuit related to Fig. 7.

Although not shown in FIG. 13, the aerosol-generating device 1 may further include a connection interface such as a universal serial bus (USB) interface, and may be connected to other external devices through the connection interface such as a USB interface to transmit and receive information or charge the power supply 101.

The controller 102 may control overall operation of the aerosol-generating device 1. In an embodiment, the controller 1 may include at least one processor. The processor may be implemented as an array of a plurality of logic gates or may be implemented as a combination of a general-purpose microprocessor and a memory in which a program executable in the microprocessor is stored. Also, it will be understood by those skilled in the art that the processor can be implemented in other forms of hardware.

The controller 102 may control the supply of power from the power supply 101 to the heater 50 to control the temperature of the heater 50. The controller 102 may control the temperature of the cartridge heater 70 and/or the heater 50 based on the temperature of the cartridge heater 70 and/or the heater 50 detected by the temperature sensor 1031. The controller 102 may control the power supplied to the cartridge heater 70 and/or the heater 50 based on the temperature of the cartridge heater 70 and/or the heater 50. For example, the controller 102 may determine a target temperature of the cartridge heater 70 and/or the heater 50 based on the temperature profile stored in the memory 107.

The aerosol-generating device 1 may include a power supply circuit (not shown) electrically connected to the power supply 101 between the power supply 101 and the cartridge heater 70 and/or the heater 50. The power supply circuit may be electrically connected to the cartridge heater 70, the heater 50, or the induction coil 501. The power supply circuit may include at least one switching element. The switching element may be implemented as a bipolar junction transistor (BJT), a field effect transistor (FET), or the like. The controller 102 may control the power supply circuit.

The controller 102 may control switching of the switching element of the power supply circuit to control the supply of power. The power supply circuit may be an inverter configured to convert direct current power output from the power supply 101 into alternating current power. For example, the inverter may be composed of a full-bridge circuit or a half-bridge circuit including a plurality of switching elements.

The controller 102 may turn on the switching element so that power is supplied from the power supply 101 to the cartridge heater 70 and/or the heater 50. The controller 102 may turn off the switching element so that the supply of power to the cartridge heater 70 and/or the heater 50 is interrupted. The controller 102 may control the frequency and/or the duty ratio of the current pulse input to the switching element to control the current supplied from the power supply 101.

The controller 102 may control switching of the switching element of the power supply circuit to control the voltage output from the power supply 101. The power conversion circuit may convert the voltage output from the power supply 101. For example, the power conversion circuit may include a buck-converter configured to step down the voltage output from the power supply 101. For example, the power conversion circuit may be implemented as a buck-boost converter, a Zener diode, or the like.

The controller 102 may control on/off operation of the switching element included in the power conversion circuit to control the level of the voltage output from the power conversion circuit. If the switching element is maintained in an on state, the level of the voltage output from the power conversion circuit may correspond to the level of the voltage output from the power supply 101. The duty ratio for the on/off operation of the switching element may correspond to a ratio of the voltage output from the power conversion circuit to the voltage output from the power supply 101. As the duty ratio for the on/off operation of the switching element decreases, the level of the voltage output from the power conversion circuit may decrease. The heater 50 may be heated based on the voltage output from the power conversion circuit.

The controller 102 may control the supply of power to the heater 50 using at least one of a pulse width modulation (PWM) scheme or a proportional-integral-differential (PID) scheme.

For example, the controller 102 may perform control using the PWM scheme such that a current pulse having a predetermined frequency and a predetermined duty ratio is supplied to the heater 50. The controller 102 may control the frequency and the duty ratio of the current pulse to control the power supplied to the heater 50.

For example, the controller 102 may determine, based on the temperature profile, a target temperature to be controlled. The controller 102 may control the power supplied to the heater 50 using the PID scheme, which is a feedback control scheme using a difference value between the temperature of the heater 50 and the target temperature, a value obtained by integrating the difference value with respect to time, and a value obtained by differentiating the difference value with respect to time.

The controller 102 may prevent the cartridge heater 70 and/or the heater 50 from overheating. For example, the controller 102 may control operation of the power conversion circuit such that the supply of power to the cartridge heater 70 and/or the heater 50 is interrupted when the temperature of the cartridge heater 70 and/or the heater 50 exceeds a predetermined limit temperature. For example, the controller 102 may reduce the amount of power supplied to the cartridge heater 70 and/or the heater 50 by a predetermined ratio when the temperature of the cartridge heater 70 and/or the heater 50 exceeds a predetermined limit temperature. For example, when the temperature of the cartridge heater 70 exceeds a limit temperature, the controller 102 may determine that the aerosol-generating substance contained in the cartridge has been exhausted and may interrupt the supply of power to the cartridge heater 70.

The controller 102 may control charging/discharging of the power supply 101. The controller 102 may check the temperature of the power supply 101 based on an output signal from the temperature sensor 1031.

If a power line is connected to a battery terminal of the aerosol-generating device 1, the controller 102 may determine whether the temperature of the power supply 101 is equal to or higher than a first limit temperature, which is a reference temperature at which charging of the power supply 101 is interrupted. When the temperature of the power supply 101 is lower than the first limit temperature, the controller 102 may perform control such that the power supply 101 is charged based on a predetermined charging current. When the temperature of the power supply 101 is equal to or higher than the first limit temperature, the controller 102 may interrupt charging of the power supply 101.

When the aerosol-generating device 1 is in an on state, the controller 102 may determine whether the temperature of the power supply 101 is equal to or higher than a second limit temperature, which is a reference temperature at which discharging of the power supply 101 is interrupted. When the temperature of the power supply 101 is lower than the second limit temperature, the controller 102 may perform control such that the power stored in the power supply 101 is used. When the temperature of the power supply 101 is equal to or higher than the second limit temperature, the controller 102 may interrupt use of the power stored in the power supply 101.

The controller 102 may calculate or determine the remaining amount of power stored in the power supply 101. For example, the controller 102 may calculate or determine the remaining capacity of the power supply 101 based on a voltage and/or current detection value of the power supply 101.

The controller 102 may determine whether the stick S is inserted into the insertion space using the insertion detection sensor 1033. The controller 102 may determine that the stick S has been inserted based on an output signal from the insertion detection sensor 1033. Upon determining that the stick S has been inserted into the insertion space, the controller 102 may perform control such that power is supplied to the cartridge heater 70 and/or the heater 50. For example, the controller 102 may supply power to the cartridge heater 70 and/or the heater 50 based on the temperature profile stored in the memory 107.

The controller 102 may determine whether the stick S is removed from the insertion space. For example, the controller 102 may determine whether the stick S is removed from the insertion space using the insertion detection sensor 1033. For example, the controller 102 may determine that the stick S has been removed from the insertion space when the temperature of the heater 50 is equal to or higher than a limit temperature or when the temperature change slope of the heater 50 is equal to or greater than a predetermined slope. Upon determining that the stick S has been removed from the insertion space, the controller 102 may interrupt the supply of power to the cartridge heater 70 and/or the heater 50.

The controller 102 may control a power supply time and/or the amount of power supplied to the heater 50 depending on the state of the stick S detected by the sensor 103. The controller 102 may check, based on a look-up table, a level range within which the level of a signal from the capacitance sensor is included. The controller 102 may determine the amount of moisture in the stick S based on the checked level range.

When the stick S is in a highly humid state, the controller 102 may control a time during which power is supplied to the heater 50 to increase a preheating time of the stick S compared to when the stick S is in a normal state.

The controller 102 may determine whether the stick S inserted into the insertion space is a reused stick using the reuse detection sensor 1034. For example, the controller 102 may compare a sensing value of a signal from the reuse detection sensor with a first reference range within which the first color is included, and may determine that the stick S is not a reused stick when the sensing value is within the first reference range. For example, the controller 102 may compare a sensing value of a signal from the reuse detection sensor with a second reference range within which the second color is included, and may determine that the stick S is a reused stick when the sensing value is within the second reference range. Upon determining that the stick S is a reused stick, the controller 102 may interrupt the supply of power to the cartridge heater 70 and/or the heater 50.

The controller 102 may determine whether the cartridge is coupled and/or removed using the cartridge detection sensor 1035. For example, the controller 102 may determine whether the cartridge is coupled and/or removed based on a sensing value of a signal from the cartridge detection sensor.

The controller 102 may determine whether the aerosol-generating substance in the cartridge is exhausted. For example, the controller 102 may apply power to preheat the cartridge heater 70 and/or the heater 50, and may determine whether the temperature of the cartridge heater 70 exceeds a limit temperature in a preheating section. When the temperature of the cartridge heater 70 exceeds the limit temperature, the controller 102 may determine that the aerosol-generating substance in the cartridge has been exhausted. Upon determining that the aerosol-generating substance in the cartridge has been exhausted, the controller 102 may interrupt the supply of power to the cartridge heater 70 and/or the heater 50.

The controller 102 may determine whether use of the cartridge is possible. For example, upon determining, based on the data stored in the memory 107, that the current number of puffs is equal to or greater than the maximum number of puffs set for the cartridge, the controller 102 may determine that use of the cartridge is impossible. For example, when a total time period during which the cartridge heater 70 is heated is equal to or longer than a predetermined maximum time period or when the total amount of power supplied to the cartridge heater 70 is equal to or greater than a predetermined maximum amount of power, the controller 102 may determine that use of the cartridge is impossible.

The controller 102 may make a determination as to a user puff using the puff sensor 1032. For example, the controller 102 may determine, based on a sensing value of a signal from the puff sensor, whether a puff occurs. For example, the controller 102 may determine the intensity of a puff based on a sensing value of a signal from the puff sensor 1032. When the number of puffs reaches a predetermined maximum number of puffs or when no puff is detected for a predetermined time period or longer, the controller 102 may interrupt the supply of power to the cartridge heater 70 and/or the heater 50.

The controller 102 may determine whether the upper case is coupled and/or removed using the upper case detection sensor 1036. For example, the controller 102 may determine, based on a sensing value of a signal from the upper case detection sensor, whether the upper case is coupled and/or removed.

The controller 102 may control the output unit 104 based on a result of detection by the sensor 103. For example, when the number of puffs counted through the puff sensor 1032 reaches a predetermined number, the controller 102 may notify the user that operation of the aerosol-generating device 1 will end soon through at least one of the display 1041, the haptic unit 1042, or the sound output unit 1043. For example, upon determining that the stick S is not present in the insertion space, the controller 102 may notify the user of the determination result through the output unit 104. For example, upon determining that the cartridge and/or the upper case has not been mounted, the controller 102 may notify the user of the determination result through the output unit 104. For example, the controller 102 may transmit information about the temperature of the cartridge heater 70 and/or the heater 50 to the user through the output unit 104.

Upon determining that a predetermined event has occurred, the controller 102 may store a history of the corresponding event in the memory 107 and may update the history. The event may include events performed in the aerosol-generating device 1, such as detection of insertion of the stick S, commencement of heating of the stick S, detection of puff, termination of puff, detection of overheating of the cartridge heater 70 and/or the heater 50, detection of application of overvoltage to the cartridge heater 70 and/or the heater 50, termination of heating of the stick S, on/off operation of the aerosol-generating device 1, commencement of charging of the power supply 101, detection of overcharging of the power supply 101, and termination of charging of the power supply 101. The history of the event may include the occurrence date and time of the event and log data corresponding to the event. For example, when the predetermined event is detection of insertion of the stick S, the log data corresponding to the event may include data on a value detected by the insertion detection sensor 1033. For example, when the predetermined event is detection of overheating of the cartridge heater 70 and/or the heater 50, the log data corresponding to the event may include data on the temperature of the cartridge heater 70 and/or the heater 50, the voltage applied to the cartridge heater 70 and/or the heater 50, and the current flowing through the cartridge heater 70 and/or the heater 50.

The controller 102 may perform control for formation of a communication link with an external device such as a user's mobile terminal. Upon receiving data on authentication from an external device via the communication link, the controller 102 may release restriction on use of at least one function of the aerosol-generating device 1. Here, the data on authentication may include data indicating completion of user authentication for the user corresponding to the external device. The user may perform user authentication through the external device. The external device may determine, based on the user's birthday or an identification number indicating the user, whether the user data is valid, and may receive data on the authority for use of the aerosol-generating device 1 from an external server. The external device may transmit data indicating completion of user authentication to the aerosol-generating device 1 based on the data on the use authority. When the user authentication is completed, the controller 102 may release restriction on use of at least one function of the aerosol-generating device 1. For example, when the user authentication is completed, the controller 102 may release restriction on use of a heating function for supplying power to the heater 50.

The controller 102 may transmit data on the state of the aerosol-generating device 1 to the external device through the communication link established with the external device. Based on the received state data, the external device may output the remaining capacity of the power supply 101 or the operation mode of the aerosol-generating device 1 through a display of the external device.

The external device may transmit a location search request to the aerosol-generating device 1 based on an input for commencement of search for the location of the aerosol-generating device 1. Upon receiving the location search request from the external device, the controller 102 may perform control, based on the received location search request, such that at least one of the output devices performs operation corresponding to location search. For example, the haptic unit 1042 may generate vibration in response to the location search request. For example, the display 1041 may output objects corresponding to location search and termination of search in response to the location search request.

Upon receiving firmware data from the external device, the controller 102 may perform control such that the firmware is updated. The external device may check the current version of the firmware of the aerosol-generating device 1 and may determine whether there is a new version of firmware. Upon receiving an input requesting firmware download, the external device may receive new version of firmware data and may transmit the new version of firmware data to the aerosol-generating device 1. Upon receiving the new version of firmware data, the controller 102 may perform control such that the firmware of the aerosol-generating device 1 is updated.

The controller 102 may transmit data on a value detected by the at least one sensor 103 to an external server (not shown) through the communication unit 107, and may receive, from the server, and store a learning model generated by learning the detected value through machine learning such as deep learning. The controller 102 may perform operation of determining the user's puff pattern and operation of generating the temperature profile using the learning model received from the server. The controller 102 may store data on the value detected by the at least one sensor 103 and data for training an artificial neural network (ANN) in the memory 107. For example, the memory 107 may store a database for each of the components provided in the aerosol-generating device 1 and weights and biases constituting the structure of the artificial neural network (ANN) in order to train the artificial neural network (ANN). The controller 102 may learn data on the value detected by the at least one sensor 103, the user's puff pattern, and the temperature profile, which are stored in the memory 107, and may generate at least one learning model used to determine the user's puff pattern and to generate the temperature profile.

As described above, at least one of embodiments of the present disclosure, an impedance parameter of a heater is compared with a reference impedance parameter and temperature-dependent impedance parameter characteristics of the heater are determined, thereby being capable of accurately determining the temperature-dependent impedance characteristics of the heater.

According to at least one of embodiments of the present disclosure, if a measured temperature of a temperature sensor is a predetermined temperature or lower or is maintained within a predetermined temperature range for a predetermined time or longer, a reference impedance parameter is determined, thereby being capable of accurately determining temperature-dependent impedance characteristics of a heater.

According to at least one of embodiments of the present disclosure, temperature-dependent impedance characteristics of a heater are determined and power applied to an induction coil is controlled based on the temperature-dependent impedance characteristics of the heater, thereby being capable of accurately controlling heating of the heater, even if there is a deviation between separation type heaters.

According to at least one of embodiments of the present disclosure, a temperature sensor is disposed adjacent to a space into which a heater is inserted, thereby being capable of accurately measuring a reference temperature for determining temperature-dependent impedance characteristics of the heater.

According to at least one of embodiments of the present disclosure, a constant voltage is applied to a heater and a current value flowing through an induction coil is measured, thereby being capable of accurately measuring an impedance parameter of the heater.

Referring to FIGs. 1 to 13, an aerosol-generating device 1 according to one aspect of the present disclosures may include a body 10 having an insertion space 14 open upward and an induction coil 15 surrounding the insertion coil 14, a heater holder 20 or 200 detachably coupled to the body 10 and provided with a heater 50 accommodated in the insertion space 14, a temperature sensor 1031 disposed adjacent to the heater 50, a power supply 101 configured to supply power to the induction coil 15, and a controller 102 configured to control the power applied to the induction coil 15, wherein the controller 102 may be configured to determine a reference impedance parameter based on a signal received from the temperature sensor 1031, determine an impedance parameter of the heater 50 based on a current value flowing through the induction coil 15, and control the power applied to the induction coil 15 based on the reference impedance parameter and the determined impedance parameter of the heater 50.

In addition, according to another aspect of the present disclosure, the aerosol-generating device may further include a memory 107 configured to store reference information comprising a matching relationship among the signal received from the temperature sensor 1031, a reference heater temperature, and the reference impedance parameter, and the controller 102 may be configured to determine the reference heater temperature based on the signal received from the temperature sensor 1031, and determine the reference impedance parameter corresponding to the reference heater temperature.

In addition, according to another aspect of the present disclosure, the controller 102 may be configured to compare the determined impedance parameter of the heater 50 with the reference impedance parameter, and determine an impedance parameter-temperature relationship of the heater 50 based on a difference between the determined impedance parameter of the heater 50 and the reference impedance parameter.

In addition, according to another aspect of the present disclosure, the controller 102 may be configured to repeatedly determine the impedance parameter of the heater 50 at each preset time within at least one heating section, determine a temperature of the heater 50 by comparing the determined impedance parameter of the heater 50 with the impedance parameter-temperature relationship of the heater 50, and control the power supplied to the induction coil based on the determined temperature of the heater 50.

In addition, according to another aspect of the present disclosure, the controller 102 may be configured to compare the determined reference heater temperature with a first temperature, and determine the reference impedance parameter corresponding to the reference heater temperature based on the determined reference heater temperature being the first temperature or lower.

In addition, according to another aspect of the present disclosure, the controller 102 may be configured to repeatedly determine the reference heater temperature, and determine the reference impedance parameter corresponding to the reference heater temperature based on the reference heater temperature being maintained within a predetermined temperature range for a first time or longer.

In addition, according to another aspect of the present disclosure, the controller may be configured to apply a constant first voltage to the induction coil 15 at each preset time, and determine the impedance parameter of the heater 50 based on the current value flowing through the induction coil 15 corresponding to the first voltage.

In addition, according to another aspect of the present disclosure, the aerosol-generating device may further include a coil driving circuit 60 electrically connected to the induction coil 15 and the power supply 101, the coil driving circuit 60 may include a converter circuit 610 configured to convert a voltage output from the power supply 101, and the controller 102 may be configured to determine the impedance parameter of the heater 50 based on a current value output from the converter circuit 610.

In addition, according to another aspect of the present disclosure, the aerosol-generating device may further include a coil driving circuit 60 electrically connected to the induction coil 15 and the power supply 101, the coil driving circuit 60 may include an inverter circuit 620 configured to convert DC power into AC power, and the controller 102 may be configured to the impedance parameter of the heater 50 based on a current value output from the inverter circuit 620.

In addition, according to another aspect of the present disclosure, the aerosol-generating device may further include a body pipe 11 including a lateral wall 111 surrounding a perimeter of the insertion space 14 and a lower wall 112 covering a bottom of the insertion space 14, and the temperature sensor 1031 may be disposed adjacent to the lower wall 112 of the body pipe 11.

In addition, according to another aspect of the present disclosure, a second insertion space 24 may be provided in the heater holder 20, the heater holder 20 may include a lateral wall 21 surrounding a perimeter of the second insertion space 24 and a lower wall 22 covering a bottom of the second insertion space 24, and the heater 50 may extend in a longitudinal direction of the second insertion space 24, and a lower end of the heater 50 is coupled or fixed to the lower wall 22.

In addition, according to another aspect of the present disclosure, the heater holder 20 may include a lateral wall 210 forming at least a part of a second insertion space 340 open upward and a lower wall 22 disposed under a lower part of the second insertion space 340, and the heater 50 may extend in a longitudinal direction of the second insertion space 340, and a lower end of the heater 50 is coupled or fixed to the lower wall 22.

In addition, according to another aspect of the present disclosure, the impedance parameter may be an apparent resistance value of the heater 50.

In addition, according to another aspect of the present disclosure, the aerosol-generating device may further include a memory 107 configured to store reference information including a matching relationship between a target temperature and set power, and the controller 102 may determine the set power corresponding to the target temperature of the heater 50 based on the reference information, and control the power supply 101 to correspond to the determined set power so as to apply the power to the induction coil 15.

In addition, according to another aspect of the present disclosure, the reference information further include an impedance upper limit value and an impedance lower limit value, and the controller 102 may compare the determined impedance-related parameter with at least one of the impedance upper limit value and the impedance lower limit value, and cut off the power applied to the induction coil 15 based on the determined impedance-related parameter being the impedance lower limit value or less or being impedance upper limit value or greater.

In addition, according to another aspect of the present disclosure, the aerosol-generating device may further include an extractor 300 including a lateral wall 310 detachably inserted into the insertion space 14 and configured to extend vertically, and detachably coupled to the heater holder 200, the heater holder 200 may include a lateral wall 210 detachably inserted into the insertion space 14 and configured to extend vertically, and the lateral wall 210 of the heater holder 200 and the lateral wall 310 of the extractor 300 may form a second insertion space 340 inserted into the insertion space 14 and configured to be open upward, and be alternately arranged along the perimeter of the second insertion space 340.

In addition, according to another aspect of the present disclosure, the aerosol-generating device may further include an extractor 300 detachably coupled to the heater holder 20, the heater holder 20 may be provided with a second insertion space 24 detachably inserted into the insertion space 14 and configured to be open upward, and the extractor 30 may be provided with a third insertion space 34 detachably inserted into the second insertion space 24 and configured to be open upward.

Certain embodiments or other embodiments of the disclosure described above are not mutually exclusive or distinct from each other. Any or all elements of the embodiments of the disclosure described above may be used in combination with each other or combined with each other in configuration or function.

For example, a configuration "A" described in one embodiment of the disclosure and the drawings and a configuration "B" described in another embodiment of the disclosure and the drawings may be combined with each other. Namely, although the combination between the configurations is not directly described, the combination is possible except in the case where it is described that the combination is impossible.

The above detailed description should not be construed as being limiting in all respects but should be construed as being illustrative. The scope of the disclosure should be determined by a reasonable interpretation of the accompanying claims, and all changes within the equivalent scope of the disclosure are intended to be within the scope of the disclosure.

## Claims

1. An aerosol-generating device comprising:
a body having an insertion space open upward and an induction coil surrounding the insertion coil;
a heater holder detachably coupled to the body and provided with a heater accommodated in the insertion space;
a temperature sensor disposed adjacent to the heater;
a power supply configured to supply power to the induction coil; and
a controller configured to control the power applied to the induction coil,
wherein the controller is configured to:
determine a reference impedance parameter based on a signal received from the temperature sensor;
determine an impedance parameter of the heater based on a current value flowing through the induction coil; and
control the power applied to the induction coil based on the reference impedance parameter and the determined impedance parameter of the heater.

2. The aerosol-generating device according to claim 1, further comprising a memory configured to store reference information comprising a matching relationship among the signal received from the temperature sensor, a reference heater temperature, and the reference impedance parameter,
wherein the controller is configured to:
determine the reference heater temperature based on the signal received from the temperature sensor; and
determine the reference impedance parameter corresponding to the reference heater temperature.

3. The aerosol-generating device according to claim 2, wherein the controller is configured to:
compare the determined impedance parameter of the heater with the reference impedance parameter; and
determine an impedance parameter-temperature relationship of the heater based on a difference between the determined impedance parameter of the heater and the reference impedance parameter.

4. The aerosol-generating device according to claim 3, wherein the controller is configured to:
repeatedly determine the impedance parameter of the heater at each preset time within at least one heating section;
determine a temperature of the heater by comparing the determined impedance parameter of the heater with the impedance parameter-temperature relationship of the heater; and
control the power supplied to the induction coil based on the determined temperature of the heater.

5. The aerosol-generating device according to claim 2, wherein the controller is configured to:
compare the determined reference heater temperature with a first temperature; and
determine the reference impedance parameter corresponding to the reference heater temperature based on the determined reference heater temperature being the first temperature or lower.

6. The aerosol-generating device according to claim 2, wherein the controller is configured to:
repeatedly determine the reference heater temperature; and
determine the reference impedance parameter corresponding to the reference heater temperature based on the reference heater temperature being maintained within a predetermined temperature range for a first time or longer.

7. The aerosol-generating device according to claim 1, wherein the controller is configured to:
apply a constant first voltage to the induction coil at each preset time; and
determine the impedance parameter of the heater based on the current value flowing through the induction coil corresponding to the first voltage.

8. The aerosol-generating device according to claim 1, further comprising a coil driving circuit electrically connected to the induction coil and the power supply,
wherein:
the coil driving circuit comprises a converter circuit configured to convert a voltage output from the power supply; and
the controller is configured to determine the impedance parameter of the heater based on a current value output from the converter circuit.

9. The aerosol-generating device according to claim 1, further comprising a coil driving circuit electrically connected to the induction coil and the power supply,
wherein:
the coil driving circuit comprises an inverter circuit configured to convert DC power into AC power; and
the controller is configured to determine the impedance parameter of the heater based on a current value output from the inverter circuit.

10. The aerosol-generating device according to claim 1, further comprising a body pipe comprising a lateral wall surrounding a perimeter of the insertion space and a lower wall covering a bottom of the insertion space,
wherein the temperature sensor is disposed adjacent to the lower wall of the body pipe.

11. The aerosol-generating device according to claim 10, wherein:
a second insertion space is provided in the heater holder;
the heater holder comprises a lateral wall surrounding a perimeter of the second insertion space and a lower wall covering a bottom of the second insertion space; and
the heater extends in a longitudinal direction of the second insertion space, and a lower end of the heater is coupled or fixed to the lower wall.

12. The aerosol-generating device according to claim 10, wherein:
the heater holder comprises a lateral wall forming at least a part of a second insertion space open upward and a lower wall disposed under a lower part of the second insertion space; and
the heater extends in a longitudinal direction of the second insertion space, and a lower end of the heater is coupled or fixed to the lower wall.

13. The aerosol-generating device according to claim 1, wherein the impedance parameter is an apparent resistance value of the heater.
